(19)

Europäisches Patentamt

European Patent Office

Office européen des brevets

(11) **EP 4 332 205 A1**

(12) **EUROPEAN PATENT APPLICATION**
published in accordance with Art. 153(4) EPC

(43) Date of publication:
**06.03.2024 Bulletin 2024/10**

(21) Application number: **22815916.6**

(22) Date of filing: **24.05.2022**

(51) International Patent Classification (IPC):
*C10M 157/02* [(2006.01)]   *C10N 20/04* [(2006.01)]
*C10N 30/06* [(2006.01)]   *C10N 40/00* [(2006.01)]
*C10N 50/08* [(2006.01)]   *F16B 33/06* [(2006.01)]
*C10M 129/40* [(2006.01)]   *C10M 147/02* [(2006.01)]
*C10M 149/18* [(2006.01)]   *F16L 15/04* [(2006.01)]

(52) Cooperative Patent Classification (CPC):
**C10M 169/041; C10M 129/40; C10M 147/02;
C10M 149/18; C10M 157/02; F16B 33/06;
F16L 15/04;** C10M 2201/061; C10M 2213/062;
C10M 2217/0443; C10N 2020/04; C10N 2030/06;
C10N 2030/12; C10N 2040/00; C10N 2040/241;

(Cont.)

(86) International application number:
**PCT/JP2022/021278**

(87) International publication number:
**WO 2022/255166 (08.12.2022 Gazette 2022/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **31.05.2021   JP 2021091461**

(71) Applicants:
• **JFE Steel Corporation
Tokyo 100-0011 (JP)**
• **Toyo Drilube Co., Ltd.
Tokyo 155-0032 (JP)**

(72) Inventors:
• **ISHIGURO Yasuhide
Tokyo 100-0011 (JP)**
• **YOSHIKAWA Masaki
Tokyo 100-0011 (JP)**

• **GOTO Seigo
Tokyo 100-0011 (JP)**
• **SAWAKI Tetsuro
Tokyo 100-0011 (JP)**
• **SATO Hideo
Tokyo 100-0011 (JP)**
• **SHODA Koichi
Tokyo 155-0032 (JP)**
• **OKUBO Akira
Tokyo 155-0032 (JP)**
• **KOBAYASHI Ryota
Tokyo 155-0032 (JP)**
• **KUBO Ryota
Tokyo 155-0032 (JP)**
• **TOYOSAWA Kota
Tokyo 155-0032 (JP)**

(74) Representative: **Haseltine Lake Kempner LLP
One Portwall Square
Portwall Lane
Bristol BS1 6BH (GB)**

(54) **CHEMICAL SUBSTANCE FOR FORMING SOLID LUBRICANT COATING FILM, OIL WELL PIPE, AND SCREW-THREADED JOINT FOR OIL WELL PIPES**

(57)   A solid lubricating coating film is used to realize galling resistance equal to or higher than that of a method using a dope compound according to the related art in terms of lubrication characteristics at the time of make-up/break-out of oil country tubular goods. There is provided a threaded joint for oil country tubular goods including a box (2) having a thread and a pin (1) having a male thread (1a). A lubricating coating film including a solid lubricating coating film (3) is formed on a tightening surface (10) of a thread portion of at least one component of the box (2) and the pin (1), the solid lubricating coating film (3) is formed by dispersing a solid lubricant in a binder

**(Cont. next page)**

resin, 90 wt% or more of the binder resin is a polyamideimide resin, an average molecular weight of the polyamideimide resin is 20,000 or more and 40,000 or less, 80 wt% or more of the solid lubricant is polytetrafluoroethylene (PTFE), and an average molecular weight of the PTFE is 30,000 or less.

FIG. 1

(52) Cooperative Patent Classification (CPC): (Cont.)
    C10N 2040/34; C10N 2050/025; C10N 2050/08;
    C10N 2080/00

**Description**

Technical Field

The present disclosure is a technology related to lubrication of a threaded joint for oil country tubular goods. The present disclosure is a technology related to a coating film structure in which a solid lubricating coating film is formed on a tightening surface (including a metal seal surface) of a thread portion instead of a wet lubricating compound, and a threaded joint for oil country tubular goods. In the present specification, the metal seal surface is included in the tightening surface of the thread portion.

Here, the solid lubricating coating film means a coating film containing a binder resin as a matrix component and a solid lubricant dispersed and distributed in the binder resin, and if necessary, additives added. In addition, the present disclosure is intended to improve lubrication by a solid lubricating coating film that realizes lubrication of a connection for oil country tubular goods.

In addition, in the present specification, a phenomenon described by the term "lubricity" or "high lubricity" means a slippery phenomenon with a low coefficient of friction in a broad sense. In addition, the high lubricity means that the number of times of make-up/break-out (also referred to as the number of times of Make/Break (M/B)) can be equal to or greater than a specified number of times in a narrow sense. For example, galling resistance of the threaded joint for oil country tubular goods are described in the API 5C5 standard. In the API 5C5 standard, it is required for the threaded joint for oil country tubular goods to have a casing size in which it can be made up up to 3 times. In addition, it is required for the threaded joint for oil country tubular goods to have a tubing size in which it can be made up up to 10 times.

In the present specification, a pipe including a female thread may be collectively referred to as a box. That is, a coupling is also described as the type of box.

Background Art

In the threaded joint for oil country tubular goods, the following process has been performed for lubrication of the thread portion in the related art. That is, a surface treatment is performed on a tightening surface (seal surface) of the thread portion of at least one component on a male thread side and a female thread side (hereinafter, also simply referred to as a "tightening surface") by a Mn phosphate chemical conversion coating film or electroplating using Cu or the like. Thereafter, a lubricating compound containing Pb, Zn, and the like is applied onto the coating film formed by the surface treatment to lubricate the thread portion. In the present specification, in a case where the coating film is formed on the tightening surface (seal surface) of the thread portion, the tightening surface including the coating film is also referred to as a tightening surface.

Meanwhile, in recent years, a non-wet lubrication technology by "dry dope-free" has attracted attention. The "dry dope-free" means that a film itself is not a viscous liquid such as an API-mod compound and does not contain harmful heavy metals. As the "dry dope-free" lubrication, there is a technology of forming a solid lubricating coating film on a tightening surface to achieve lubrication. The present disclosure is a technology related to the "dry dope-free" lubrication.

Here, in past patent literatures, there are inventions related to various solid lubricating coating films. The solid lubricating coating film includes a lubricant component in charge of lubrication and a solid film as a matrix component that holds the lubricant component in the film. The solid film means a film having no viscosity and does not mean a liquid film. The solid film itself also means that it implements completion of lubrication at the time of make-up/break-out of a connection. A Mn phosphate film or Cu electroplated film according to the related art itself is a solid film. However, since it is premised that lubrication is achieved by applying a grease-like compound, the grease-like compound is not contained in the solid lubricating coating film. In the present disclosure, lubrication is achieved as a solid film, and an organic resin film is assumed as the solid film. Therefore, in the following description, the solid film is also referred to as a binder resin.

The solid lubricating coating films according to the related art used in the threaded joints for oil country tubular goods are described in, for example, PTLs 1 to 5. In addition, lubrication technologies used for applications different from those of the threaded joint for oil country tubular goods are described in, for example, PTLs 6 to 14.

Citation List

Patent Literature

PTL 1: JP 2002-348587 A
PTL 2: JP 2002-310345 A

PTL 3: JP 2005-299693 A
PTL 4: JP 2008-069883 A
PTL 5: JP 2002-327874 A
PTL 6: JP H11-199884 A
PTL 7: JP 2001-49285 A
PTL 8: JP 2008-38108 A
PTL 9: JP 2011-105831 A
PTL 10: JP H08-103724 A
PTL 11: JP H08-105582 A
PTL 12: JP 2001-65751 A
PTL 13: JP 2001-99364 A
PTL 14: JP 2002-348587 A

Non Patent Literature

NPL 1: Tsuru et al., Journal of the Japanese Association for Petroleum Technology, Vol. 61, No. 6 (1996), PP. 527-536

Summary of Invention

Technical Problem

The inventors have studied a solid lubricating coating film by referring to a material of the solid lubricating coating film described in the known prior arts such as the patent literatures described above. Specifically, the inventors have selected a plurality of solid lubricant candidates, and have selected a tetrafluoroethylene polymer (PTFE) as a main component of the solid lubricant from the selected solid lubricants. Further, the inventors have selected a plurality of solid films (binder resins), and have selected a polyamideimide copolymer (PAI) as a main component of the solid film from the selected solid film candidates. Then, the inventors have studied the lubricity of the film structure of the solid lubricating coating film containing PTFE as a main component of the solid lubricant and PAI as a main component of the binder resin.

However, simply referred to the description in the past, in a case where the solid lubricating coating film containing PTFE as a main component of a solid lubricant and PAI as a main component of a binder resin is used for lubrication of the threaded joint for oil country tubular goods, the following was found. That is, in a test for make-up/break-out of the connection for oil country tubular goods, when the evaluation was performed by a new test assuming an environment used in an actual well, it was found that the lubrication behavior was not enough and the lubrication assumed in the actual well was not enough.

As will be described below, the inventors have found that lubricity (galling resistance) cannot be correctly evaluated in a case where a solid lubricating coating film is used for lubrication of a threaded joint for oil country tubular goods in the make-up/break-out test according to the related art (hereinafter, simply described as a "test") performed in a laboratory evaluation test using a short pin.

Here, examples of a publication in which PTFE is described as a solid lubricant include PTL 4. PTL 4 discloses an invention in which a solid lubricating coating film is formed on two stacked metal or alloy layers having different hardness. In addition, PTL 4 describes that a preferred solid lubricating coating film is not particularly limited, and the solid lubricating coating film encompasses all solid lubricating coating films. Further, $MoS_2$, $WS_2$, BN, graphite, PTFE, and the like are merely exemplified as the solid lubricant. In addition, as a binder resin, only an epoxy resin, a polyimide resin, a polyethersulfone resin, a polyetheretherketone resin, a phenol resin, and the like are disclosed.

There are also patent literatures in which PAI is described as a binder resin. However, in many cases, PAI is only described as one of examples of all organic polymers (resins), inorganic polymers, glass, and the like without particularly specifying a binder resin. That is, PAI is not described as a preferred binder resin. For example, in PTLs 1 to 5, examples of the organic resin (binder resin) include thermosetting resins such as an epoxy resin, a polyimide resin, a polycarbodiimide resin, a polyethersulfone resin, a polyetheretherketone resin, a phenol resin, a furan resin, a urea resin, and an acrylic resin, a polyamideimide resin, a polyethylene resin, a silicone resin, and a polystyrene resin. As described above, PAI is merely exemplified as an example of the plurality of organic resins.

In addition, as a technology in which lubrication is not performed by a solid lubricating coating film, there is a technology in which a molecular weight is specified for thread lubrication of oil country tubular goods. However, in the technology, a matrix component is not PAI, and PTFE is added as a solid lubricant to a base oil-based matrix component. Examples of such a literature include PTL 9. PTL 9 discloses that a molecular weight specification of PTFE is about 10,000 to 300,000, and a molecular weight of PTFE is 20,000 to 200,000 as a preferred range. PTL 9 is described as an invention that specifies that a larger size of PTFE is more preferable.

In addition, PTLs 10 and 11 describe that PAI is as a binder resin. In PTLs 10 and 11, a molecular weight of PAI is specified for use in oil country tubular goods. Each of PTLs 10 and 11 discloses an invention of an agent in which a powder of molybdenum disulfide having a specified particle size is selected as a solid lubricant, and the powder of molybdenum disulfide is mixed with PAI having a molecular weight of 15,000 in an appropriate range. In PTLs 10 and 11, a molecular weight specification of PAI is described in the description that the binder resin is formed of one selected from an epoxy resin of 2,000 to 10,000, a furan resin of 150 to 250, and PAI of 10,000 to 25,000. Each of PTLs 12 and 13 discloses an invention in which PAI (binder resin) having a molecular weight of 15,000 and molybdenum disulfide (solid lubricant) having an average particle size of 1.0 um are mixed each other.

PTLs 12 and 13 show examples including PTFE as a solid lubricant and PAI as a binder resin. Specifically, PTL 12 specifies a range in which the amount of PTFE is 1% to 30% with respect to the total weight of a solid lubricating powder. The invention described in PTL 13 is an invention in which PTFE may be present as long as it is contained in a small amount of about 10% or less of the total weight of the lubricating material. However, in PTLs 12 and 13, a main constituent of the invention is composed of a solid lubricant mainly containing $MoS_2$, $WS_2$, and graphite, and PTFE is regarded as an additionally additive agent that may be mixed in a small amount.

As described above, in the field of the lubrication of the connection for oil country tubular goods, there is no invention that a tetrafluoroethylene polymer (PTFE) as a solid lubricant and PAI (PAI copolymer) as a binder resin film are preferred as main components, and a molecular weight of each of PTFE and PAI is specified based on a combination thereof. Even if it is specified, lubrication is not appropriately evaluated and described.

Here, the lubrication, which is a target of the present disclosure, has a unique circumference in which the main point of the lubrication is a solid lubricating coating film in the evaluation of lubrication characteristics. Further, the lubrication, which is a target of the present disclosure, has also a unique circumference in which a target of the lubrication is a connection for oil country tubular goods in the evaluation of lubrication characteristics.

Next, the description of this will be added based on the new findings obtained by the inventors.

In PTLs 1 to 14 exemplified above, the inventions of the solid lubricating coating film or the past findings of the constituent element of the film structure and the like are described. However, according to the studies conducted by the inventors, as assumed from examples of each patent literature, it is often unclear whether or not the evaluation of the lubrication characteristics of the solid lubricating coating film is properly performed as compared with the lubrication technology at the time of making up of the connection according to the related art. Specifically, the inventors have obtained a view that it is unclear whether or not the evaluation method according to the related art performs a test on a connection for oil country tubular goods (8 to 12 m class) having a length used in an actual well under a condition intended for a lubrication behavior assuming that the connection for oil country tubular goods are made up in the actual well. In the actual well, an 8 to 12 m class long pin (male thread) is set on the upper side, a coupling (female thread: box) is set on the lower side, and the pin is made up and run. In the making up, break-out is performed depending on the situation, and the make-up is performed again. In addition, in most cases, marine rigs are run in a pin unit in which three pins are connected in advance. Here, 8 to 12 m class corresponds to a length of Range-2 or Range-3 specified in API-5CT or 5CRA.

In the make-up/break-out in which lubrication in which a solid lubricating coating film is not used is performed by a compound according to the related art, a grease-like compound moves in conjunction with the make-up/break-out of the connection. This is because the compound is a viscous liquid. Therefore, in a case where the lubrication evaluation is performed using the compound according to the related art, the thread lubrication evaluation may in some cases be performed without concern for the evaluation method, either a test with horizontal tongs (horizontal make-up machine) (also referred to as a horizontal test), a test with vertical tongs using a short pin (also referred to as a vertical test), or the make-up performed in an actual well. That is, in the case of the lubrication by the compound, the laboratory evaluation by the thread lubrication evaluation method has almost the same result as the evaluation result actually assumed for a well, and there is almost no concern that the laboratory evaluation will be evaluated differently.

On the other hand, in the case of using the solid lubricating coating film for lubrication, unless the solid lubricating coating film is determined in consideration of the make-up situation in the actual well, even if it is highly evaluated in the laboratory test, the lubrication definitely doesn't work in the actual well. This is because, structurally, it is inevitable that the solid lubricating coating film is partially peeled off at the time of make-up/break-out, and the solid lubricating coating film does not move in tandem like the compound. Therefore, in a case where a solid lubricating coating film is used for lubrication, even a threaded joint evaluated as acceptable in an evaluation in a situation where no load is applied as in a horizontal type test does not work in an actual well.

The reason can be described as follows.

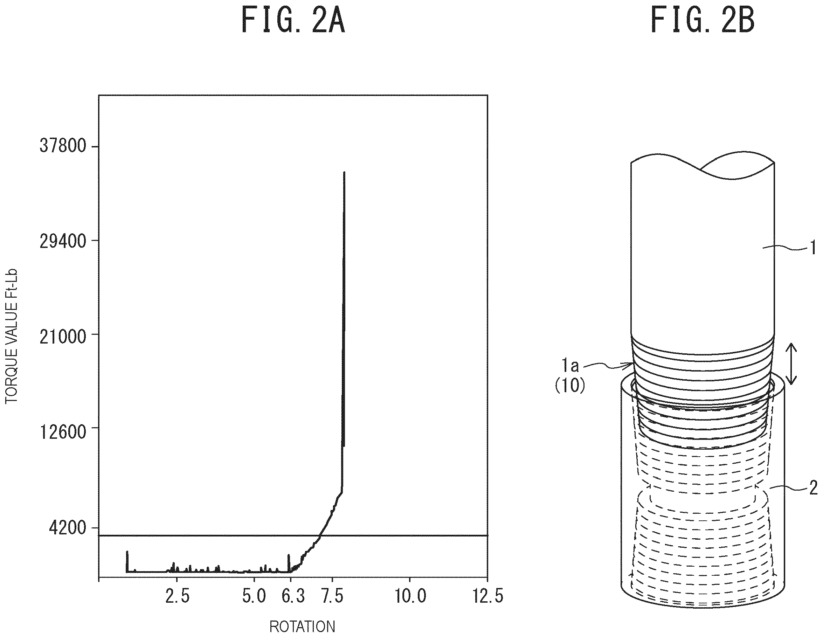

For example, FIG. 2A is a typical example of a torque-turn chart when a solid lubricating coating film is made up in a simulated well using an actual length pin (often having a length of 8 to 14 m). The actual length pin is long and is set slightly obliquely at all times, and the pin connection is not tightened any more by hand at a place where about half of the pin connection is exposed. Actually, when the actual pin is set by being inserted into the box connection and viewed from below, it looks like the pin is bent. Therefore, even when an attempt is made to make up the pin connection, the initial set position can be set only at a position where more than half of the total number of threads of the pin connection are exposed from the box connection (see FIG. 2B). Therefore, although FIG. 2A is an example, until the number of times of rotations after setting is about 6, only an irregular spike-like torque is raised until the threads sufficiently mesh with each other, and a steady torque is not raised on a daily basis. When make-up is performed with power tongs from the position of FIG. 2B, the pin connection moves to a normal thread position so as to be hidden by the box connection. However, since the initial set cannot be straightened, there is play at the beginning of make-up, and the pin connection does not uniformly hit the box connection but unevenly hits the box connection. At this time, as described above, the spike-like torque tends to be irregularly raised. After the threads mesh with each other, the torque is raised upward to the right as illustrated in FIG. 2A. In an actual well using an actual length pin, the threads are biased and in strong contact with each other, and adverse effects generated by strong contact due to a large load based on the self-weight of the entire length of the pin are superimposed. The spike-like torque uniquely occurs when the solid lubricating coating film is made up until the threads sufficiently mesh with each other, but it does not occur when a dope compound according to the related art is used. Since the dope compound is viscous liquid, an irregular rise in spike-like torque generated in the solid lubricating coating film for movement in conjunction with the make-up/break-out does not occur. In other words, it means that in the lubrication with the solid lubricating coating film, the solid lubricating coating film is damaged to a considerable extent because the threads are occasionally in irregular and strong contact with each other, and a large load due to the self-weight of the pin is applied until the threads mesh with each other.

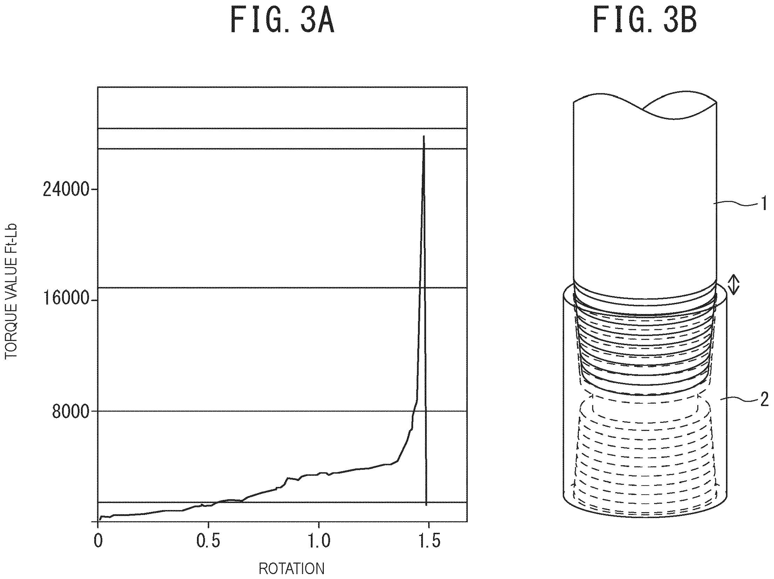

On the other hand, the evaluation of the solid lubricating coating film using a short pin, which is often performed in a laboratory, is in contrast to FIG. 2A, of which a torque-turn chart is illustrated in FIG. 3A. FIG. 3B illustrates an initial set position. In the case of a short pin, the initial set position is set by tightening by hand immediately before the start of make-up, and the pin connection can be made up until about 1 to 3 threads are exposed. As illustrated in FIG. 3A, there are only 1.5 rotations after setting, and the irregular torque seen in FIG. 2A is almost zero. That is, there is no process in which the torque is irregularly raised in a spike shape, and the torque is raised to the right from the beginning of make-up. That is, since the connection can be set at the position where mesh is already performed at the time of initial setting, lubrication at the time of the make-up can be started from a level at which the solid lubricating coating film is hardly damaged. Further, the short pin is advantageous because the self-weight derived from the pin is a light load at a level of less than 1/10 compared to an actual length pin.

In the lubrication evaluation of the solid lubricating coating film, it is not possible to distinguish between good and bad of the lubricating film unless a lubrication evaluation method is employed in which a spike-like torque irregularly observed in FIG. 2A is raised, the solid lubricating coating film is damaged, the influence of rattling (the influence of a biased load), and the influence of a large load are simulated. "Acceptable" in the evaluation using the short pins as illustrated in FIGS. 3A and 3B does not necessarily mean "acceptable" in the actual environment.

According to these studies conducted by the present inventors, in a case where a solid lubricating coating film is adopted for lubrication and make-up/break-out in an actual well is assumed, the following two points should be mainly considered.

(1) There is damage to the solid lubricating coating film due to play of the connection.
(2) In the worst case, it is necessary to consider lubrication when a large weight is applied so that the total weight of the pin (the total weight of the pin on the upper male thread side) is applied to the coupling (the female thread side of the lower box).

Then, due to the superimposed actions of (1) and (2), a phenomenon itself in which the solid lubricating coating film is partially peeled off, which is structurally unavoidable, occurs. Furthermore, the peeled debris is reconfigured at the time of make-up/break-out, and contributes to lubrication, or conversely, by being solidified, a situation where a gap between the male thread and the female thread is closed to cause galling occurs. Therefore, the present inventors have found that when such a phenomenon is not taken into consideration, the lubrication evaluation of the solid lubricating coating film becomes unsatisfactory, and the lubrication evaluation of the solid lubricating coating film is insufficient.

Actually, when lubrication of a threaded joint for oil country tubular goods using a solid lubricating coating film for lubrication is evaluated using a short pin by a horizontal make-up machine, in most cases, the evaluation of lubrication is determined to be acceptable and there is no problem. However, when a pin (short pin) having the same length is erected and a vertical make-up machine is used to perform a make-up/break-out test for lubrication of a threaded joint for oil country tubular goods using a solid lubricating coating film, galling may occur only under this condition. Furthermore, unless the solid lubricating coating film is devised, when a make-up/break-out test is performed with a vertical make-up machine using the pin with the same length as an actual pin used in an actual well, galling occurs in most of the pins in the first break-out. The actual pin is of, for example, an 8 to 12 m class, and is Range-2 or Range-3.

That is, in the case of a test according to the related art in which lubrication of a solid lubricating coating film is evaluated with a short pin shorter than an actual pin used in an actual well, only a threaded joint that is completely unacceptable in both the horizontal test and the vertical test can be extracted. Therefore, it has not been possible to accurately evaluate whether or not lubrication in an actual well is acceptable. That is, the present inventors have found that, in the related art, the lubrication evaluation of a solid lubricating coating film cannot be actually simulated by a test using a short pin. Therefore, the present inventors have found that unless upper and lower limit values of parameters for specifying a technology are accurately evaluated by a test method in consideration of an actual well, a preferred range of lubricity of a solid lubricating coating film cannot be specified. In the evaluation in the vertical test according to the related art, the evaluation is performed using a short pin shorter than an actual pin used in an actual well. Therefore, it has been found that the evaluation cannot be accurately performed in the evaluation in the vertical test according to the related art.

Here, as an example of a technology in which a load is applied to a short pin, there is a technology published in NPL 1. NPL 1 discloses that vertical tongs are used, and 500 kg of a weight is placed on an upper end of a pin to perform make-up/break-out. However, 500 kg of a weight is too light to simulate a load corresponding to an actual pin. In addition, PTL 5 is a patent literature intended to lubricate the connection for oil country tubular goods. In view of the drawings and the like described in PTL 5, PTL 5 describes evaluation using a short pin. Further, PTLs 1 to 4 and 10 to 14 do not describe a specific method for evaluating lubricity. However, PTLs 1 to 4 and 10 to 14 do not describe or suggest that an actual length pin is used, and thus, according to the finding according to the related art by those skilled in the art, it is estimated that the test and evaluation are performed using an about 1-m short pin with which the evaluation can be easily performed at a laboratory level, and that is used as a standard when the pin is used in the lubrication evaluation with a compound according to the related art.

PTL 5 describes that a vertical make-up machine is used to evaluate a solid lubricating coating film in a severe test in a state where an axis of a pin is inclined. That is, PTL 5 describes that lubrication and friction in a severe situation at the initial stage of making up the connection are evaluated by intentionally inclining the axis of the pin in the initial set. However, the method of PTL 5 is merely an evaluation simulating play, and it cannot be denied that the method is an unsatisfactory evaluation for the lubricating film of the solid lubricating coating film. That is, it cannot be said that the evaluation of the method of PTL 5 is performed in consideration of severe conditions assumed in the situation of the actual pin. In the evaluation of the solid lubricating coating film described in PTL 5, it is hard to say that it can be evaluated that it actually occurs in an actual well, similarly to the evaluation method using a short pin according to the related art. In addition, a test using an actual length pin, that is, a make-up test using a full-length pin and using a vertical make-up machine needs to be performed using a test site, and the cost of performing the experiment is significantly high. Therefore, it is not realistic to repeatedly perform a test using a full-length pin when determining the effect of the solid lubricating coating film, and the test is not always performed.

Here, when the specificity of lubrication of the connection for oil country tubular goods are discussed again, as described above, (1) there is structurally play in the initial stage of make-up of the connection and the late stage of break-out of the connection, and (2) lubrication and friction in a state in which a large weight is applied from above are targeted.

According to the findings of the present inventors, play occurs in the structure of the connection for oil country tubular goods. That is, in the male thread (for example, pin connection) and the female thread (for example, coupling connection), before the threads start to mesh with each other so that the male thread and the female thread can be smoothly inserted when the pin connection is set, play unique to the connection occurs. In addition, although make-up/break-out of the connection for oil country tubular goods are performed while suspending the pin to be set above, it is necessary to assume a large load application condition in which the self-weight of the pin positioned at an upper portion is applied to the female thread side to some extent. For example, a pin (male thread) of 8 to 12 m class (a length of Range-2 or Range-3 specified in API-5CT or 5CRA) positioned at an upper portion is set in an upper portion, a coupling (female thread) is set in a lower portion, and make-up or break-out is performed. Therefore, in a case of a pin having a large diameter, make-up/break-out is performed in a state where a weight of about 1 ton of one pin is applied per pin. In a well on the sea, as is common, three pins are connected and used. As a result, in the severest case, a weight of about 3 tons is applied from the pin to the female thread portion and made up. This leads to significantly severe friction conditions. As described above, since there is rattling at the initial stage of make-up and the late stage of break-out, a large load from above is not uniformly applied to the female thread but is biased. Therefore, the large load is locally applied to a thread portion. It is required to realize lubrication corresponding to a lubrication level realized by a compound according to the related art by specifying and optimizing a binder resin and a solid lubricant as an additive in the binder resin for a solid lubricating coating film that can withstand this. However, the evaluation on the solid lubricating coating film according to the related art has not been made under such conditions that occur in actual wells.

Although it is intended for lubrication applications other than the connection for oil country tubular goods (lubrication for applications different from the present disclosure), there are patent literatures in which PTFE is described as a solid lubricant, PAI is described as a binder resin, the molecular weight, size, and the like of PTFE and PAI are specified, and a region having excellent lubricity is exhibited. For example, PTFE as a solid lubricant is described in PTLs 6 to 9. PTLs 6 to 9 disclose inventions that realize lubrication by specifying a low molecular weight. In addition, in applications to lubricants and surface modifiers, PTFE according to the related art is about 100,000, and there is an invention that specifies a low molecular weight in terms of lubrication characteristics with respect to this value. However, in these prior arts, there is no binder resin or PTFE is merely sprinkled on the surface to be lubricated. Alternatively, it should be noted that it is not used in combination with PAI, which is a binder resin targeted by the present disclosure.

For example, PTL 6 relates to lubrication in a bearing member. PTLs 7 and 8 broadly describe specification as lubricating agents. PTL 6 discloses that PTFE molecular weight ≤ 25,000, and the PTFE molecular weight is 7,000 to 15,000 as a more preferred range. PTL 7 discloses that a molecular weight is 500 to 20,000, and a particularly excellent range of the molecular weight is 1,000 to 5,000. PTL 8 specifies a tetrafluoroethylene polymer (PTFE) and a chlorotrifluoroethylene polymer each having a molecular weight of 300 to 3,000.

However, in the lubrication field for other than the connection for oil country tubular goods, two objects to be lubricated are already in contact with each other or are close to a close contact state at a fixed position at all times, such as in lubrication of bearing steel of an automobile or lubrication of gears of a machine component. In many cases, lubrication from this state is a target. Alternatively, the sliding direction is limited to one direction as in lubrication such as press processing and die cutting, and furthermore, lubrication at a fixed position in the dies with the pressing target material interposed therebetween is assumed. In these lubrication examples, the lubricant has already been applied thereto, and is used on the premise of a close contact state. Therefore, a coefficient of friction, wear, and the like may be intended, and a friction phenomenon in a state in which a substantially constant stress continues to be applied is targeted. In addition, in order to ensure lubrication at that time, oil is simply sprayed, $MoS_2$ that is a solid lubricant is sprayed, or the like is used, or lubricating oil is always supplied and used. Therefore, the conditions of lubrication used in the lubrication field for other than these connections for oil country tubular goods do not assume conditions assumed for the conditions of the connection for oil country tubular goods at all. That is, the premise in the lubrication field for other than the connection for oil country tubular goods are a state in which there is no play or small play in the two objects, which is completely different from a situation where a part of the lubricating film is peeled off due to the play and the large load application condition and has a secondary influence. Therefore, it is difficult to simply apply lubrication for other than the connection for oil country tubular goods to lubrication for the connection for oil country tubular goods.

The present invention has been made in view of the above points, and an object of the present invention is to realize, by using a solid lubricating coating film, galling resistance equal to or higher than that of a method using a dope compound according to the related art in terms of lubrication characteristics at the time of make-up/break-out of oil country tubular goods.

Solution to Problem

An aspect of the present invention is a technology for ensuring effective lubrication by a solid lubricating coating film under a lubrication condition that occurs in an actual well, that is, under a condition in which play occurs, that is, under a condition in which a biased load is applied and under a large load application condition. In addition, an object of an aspect of the present invention is to design a solid lubricating coating film itself by a solid lubricant, a binder resin, and other specifications so that a part of the solid lubricating coating film is not peeled off at the time of make-up/break-out, and the peeled pieces are not clogged and do not cause galling.

The present inventors have considered application of a biased load due to play specific to the connection for oil country tubular goods and a large load from the pin to the box, which occurs at the time of make-up/break-out of the oil country tubular goods in an actual well in the lubrication characteristics at the time of make-up/break-out of the connection for oil country tubular goods. Furthermore, it has also been considered that the solid lubricating coating film formed on the tightening surface of the thread portion is unavoidably partially scraped by the application of a biased load or a large load. In addition, the present inventors have found an optimal combination of a solid lubricant and a binder resin and an optimal range of individual materials, thereby completing the present invention of a solid lubricating coating film for oil country tubular goods.

That is, an aspect of the present invention is oil country tubular goods in which a lubricating coating film including a solid lubricating coating film is formed in a thread portion, in which the solid lubricating coating film is formed by dispersing a solid lubricant in a binder resin, 90 wt% or more of the binder resin is a polyamideimide resin (PAI), an average molecular weight of the PAI is 20,000 or more and 40,000 or less, 80 wt% or more of the solid lubricant is polytetrafluoroethylene (PTFE), and an average molecular weight of the PTFE is 30,000 or less.

An aspect of the present invention also includes a condition in which a lubricating auxiliary film is attached as a part of the lubricating film. However, the main point of the lubrication is the solid lubricating coating film described above, and it is also intended to assist the transition to the stable position when the coupling and the pin are initially in contact with each other due to variations at the time of initial setting of the connection.

In addition, another aspect of the present invention is an agent for forming a solid lubricating coating film in a thread portion of oil country tubular goods, in which a solid lubricant is dispersed in a binder resin, 90 wt% or more of the binder resin is a polyamideimide resin, an average molecular weight of the polyamideimide is 20,000 or more and 40,000 or less, 80 wt% or more of the solid lubricant is polytetrafluoroethylene (PTFE), and an average molecular weight of the PTFE is 30,000 or less.

Advantageous Effects of Invention

According to an aspect of the present invention, by specifying the molecular weight of each of the binder resin and the solid lubricant contained in the solid lubricating coating film, it is possible to obtain lubricating performance at the time of make-up comparable to that of a connection for oil country tubular goods according to the related art without using a compound according to the related art.

For example, according to an aspect of the present invention, in consideration of conditions corresponding to an actual well which may occur in an actual well environment, a threaded joint for oil country tubular goods having lubrication performance at the time of make-up is obtained. The conditions corresponding to an actual well are conditions such as a situation where a weight of a pin is applied to a box from above, a situation where a load is applied obliquely due to a deviation of an axis, and a situation where a load is locally applied rather than uniformly.

Brief Description of Drawings

FIG. 1 is a view illustrating a threaded joint;
FIG. 2A is a view of a make-up chart in an actual well, and FIG. 2B is a view illustrating an initial set position at that time;
FIG. 3A is a view of a make-up chart in a laboratory test according to the related art, and FIG. 3B is a view illustrating an initial set position at that time;
FIG. 4 is a schematic view illustrating an example of a lubricating coating film including a solid lubricating coating film;
FIGS. 5A to 5C are schematic views illustrating another example of a lubricating coating film including a solid lubricating coating film;
FIG. 6 is a view illustrating an example of a fluorine organic compound of a surface layer;
FIG. 7 is a view for explaining a measurement of a Vickers hardness;
FIG. 8 is a view for explaining a weight tong test (new test method);
FIG. 9 is a view illustrating an installation example of a weight in the weight tong test; and
FIG. 10 is a view illustrating an example of an initial set position in the weight tong test.

Description of Embodiments

Next, embodiments will be described based on the present invention.

Here, as described above, there is a literature in which PTFE is exemplified as an example of a solid lubricant in a solid lubricating coating film applied to a threaded joint for oil country tubular goods according to the related art. In addition, there are also literatures in which PAI is exemplified as an example of a binder resin. For example, PTL 5 describes that PTFE is exemplified as an example of a lubricating powder and PAI is exemplified as an example of a binder. However, there is no example of using PTFE and PAI in examples, specifically, there is no preferred combination example, and it is merely described as an example of a solid lubricant or a binder resin. Furthermore, in the lubrication field of a connection for oil country tubular goods, which is a target of the present disclosure, there is no description or suggestion in the patent literatures in which PTFE is used as a main component of the solid lubricant, PAI is used as a main component of the binder resin, and molecular weights of the respective components are specified based on combination thereof.

Further, the inventors have simply selected PTFE as a solid lubricant and PAI as a binder resin from the materials exemplified in the past patent literatures, have formed a solid lubricating coating film using these components as main components, and have actually conducted a make-up/break-out test. In this case, the inventors have found that a threaded joint for oil country tubular goods with galling and a threaded joint for oil country tubular goods with no galling are mixed, and a situation that cannot be predicted at all occurs. For example, when agents having the same CAS numbers are purchased and the agents are formulated and used to form a film, the results are not always the same. That is, in the invention group published in the past patent literatures, lubrication achieved by the lubricating compound according to the related art cannot be realized only by combination. Therefore, excellent lubrication cannot always be realized by using or analogizing the past inventions.

In addition, in the lubrication technologies for applications other than the threaded joint for oil country tubular goods, the specification of the molecular weight of PTFE alone and the specification of the molecular weight of PAI alone are described. However, since the technology is completely different from that of lubrication of the connection for oil country tubular goods, the technology cannot be applied as it is to the oil country tubular goods field.

In addition, according to the studies conducted by the inventors, it has been found that in the test and evaluation of the threaded joint for oil country tubular goods according to the related art described in PTL 5, NPL 1, or the like, the evaluation of the lubrication characteristics specific to the solid lubricating coating film is not sufficient. In particular, the evaluation according to the related art fails to evaluate the lubrication behavior assuming that the connection for oil country tubular goods (8 to 12 m class) having an actual length is made up in the actual well. Specifically, the inventors have found that the lubrication evaluation of the solid lubricating coating film is poor, and the lubrication evaluation of the solid lubricating coating film is insufficient. That is, in the evaluation according to the related art, the lubrication of the solid lubricating coating film was tested and evaluated on the assumption of a test in which make-up/break-out were performed with a compound according to the related art, and the lubrication evaluation of the solid lubricating coating film was insufficient.

That is, it is necessary to perform the evaluation by a lubrication evaluation method that simulates an actual well and to determine detailed conditions of the solid lubricating coating film. Further, since a dry solid lubricating coating film is used, there is a new problem. That is, it was required to solve technical problems such as preventing a film-derived component that is inevitably scraped from being solidified and causing galling, and reconfiguring the film-derived component at the time of make-up/break-out to transfer the film-derived component to surfaces of a male thread and a female thread so as to maintain lubrication.

The inventors have considered an evaluation method for a new test capable of performing evaluation under conditions equivalent those for the actual well. Then, the inventors have considered, while performing a test by the evaluation method, providing a structure of a threaded joint for oil country tubular goods including a solid lubricating coating film that has further improved galling resistance of the solid lubricating coating film and withstands use in an actual well.

Then, the present inventors have found the optimal combination of a solid lubricant and a binder resin and the optimal range of the individual agents in consideration of the fact that the solid lubricating coating film is inevitably partially scraped at the time of application of a biased load or a large load due to a unique play when make-up/break-out the oil country tubular goods in the actual well in the lubrication characteristics when make-up/break-out the connection for oil country tubular goods, which are the above-described objects, thereby completing the solid lubricating coating film for the oil country tubular goods of the present embodiment.

(Configuration)

Hereinafter, embodiments will be described based on the present invention.

The present embodiment is an invention related to a coating film structure formed on a tightening surface and a threaded joint having the coating film structure as a lubricating coating film in a connection for oil country tubular goods used for actual oil/gas. The present embodiment is characterized by the lubricating coating film including the solid lubricating coating film formed on the tightening surface of the threaded joint, and the connection structure itself of the threaded joint is not particularly limited. A known or novel connection structure may be adopted as the connection structure of the threaded joint.

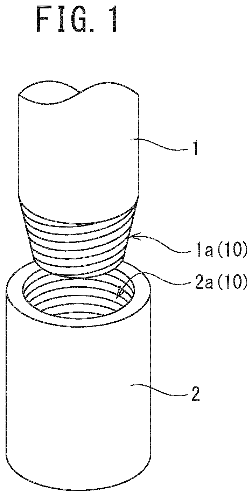

As illustrated in FIG. 1, the threaded joint for oil country tubular goods includes a box 2 such as a coupling having a female thread 2a and a pin 1 having a male thread 1a. The box 2 and the pin 1 forms oil country tubular goods.

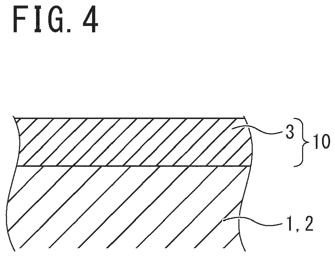

As illustrated in FIG. 4, for example, a lubricating coating film including a solid lubricating coating film 3 is formed on a contact surface (tightening surface 10) of a thread portion in at least one component of the box 2 and the pin 1.

Hereinafter, in the present embodiment, the lubricating coating film including the solid lubricating coating film 3 will be described. The lubricating coating film is formed in the thread portion of the oil country tubular goods.

The solid lubricating coating film 3 of the present invention is formed by dispersing a solid lubricant in a binder resin as a matrix component. 90 wt% or more of the binder resin is a polyamideimide resin, and an average molecular weight of the polyamideimide resin is 20,000 or more and 40,000 or less. In addition, 80 wt% or more of the solid lubricant is polytetrafluoroethylene (PTFE), and an average molecular weight of PTFE is 30,000 or less.

The PTFE contained in the solid lubricant is preferably 20 wt% or more and 50 wt% or less of the total weight of the solid lubricating coating film 3.

In addition, a hardness of the solid lubricating coating film 3 is preferably F or higher and 4H or lower in terms of pencil hardness.

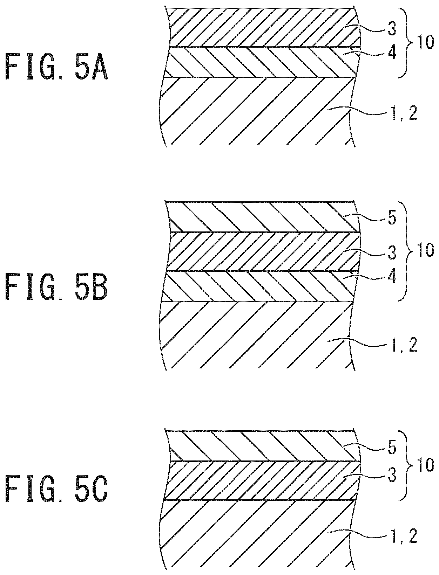

As illustrated in FIG. 5A, the lubricating coating film formed on the tightening surface 10 may include a base film 4 formed between the tightening surface 10 of the thread portion on which the solid lubricating coating film 3 is formed and the solid lubricating coating film 3. The base film 4 may be formed of, for example, a phosphate-treated film (phosphoric acid chemical conversion treated film) or an electroplated film having a Vickers hardness of 200 HV or higher.

In a case where the lubricating coating film is formed on the tightening surface 10 of the thread portion of one component of the box 2 and the pin 1, it is preferable that a coating film not be formed on the tightening surface 10 of the thread portion of the other component of the box 2 and the pin 1 or a coating film having corrosion resistance is formed on the tightening surface 10 of the thread portion of the other component of the box 2 and the pin 1. That is, the tightening surface 10 on which the lubricating coating film is not formed is left as threaded. Alternatively, it is preferable to form a film having corrosion resistance with a paint base film without being subjected to short blasting. The formation of the film having corrosion resistance is also effective for assisting lubrication as compared with lubrication by contact between the metal surface (tightening surface 10) and the solid lubricating coating film 3. The paint base film may be formed by any method of brush painting, spraying, and mechanical painting. The paint base film may be formed into a film by being left in the atmosphere for a short drying time, or may be formed into a film by being painted and dried.

In addition, in the lubricating coating film formed on at least one tightening surface of the tightening surface 10 of the thread portion on which the lubricating coating film is formed, as illustrated in FIGS. 5B and 5C, a surface layer 5 may be formed on the solid lubricating coating film 3.

In this case, the surface layer 5 is formed by applying, for example, a surface layer coating agent described below. That is, the surface layer coating agent contains a solid lubricant, a binder resin, and a solvent component that does not remain in the coating film after the surface layer coating agent is applied and dried.

The surface layer 5 is formed by applying a compound containing a fatty acid and a metal element, for example, a lubricant containing a soap and a metal soap, as a solid lubricant component, and a coating agent containing a fluorine-based organic compound, as a binder resin component, to the surface layer in a thin and acquired manner. The surface layer 5 has an action of making the tightening surface 10 of the oil country tubular goods thread portion slippery, and allows the threads to shift to a stable position, thereby supplementing more excellent lubrication characteristics.

The solid lubricant for the surface layer 5 may be formed of one or a combination of two or more kinds of compounds containing fatty acids of the following X group and metal elements of the following Y group. The binder resin for the surface layer 5 may be formed of a fluorine-based organic compound. In addition, the solvent component for the surface layer 5 may be formed of one or a combination of two or more kinds of fluorine solvents of the following Z group, which account for 90% or more of the weight of the solvent component.

- X group: stearic acid, isostearic acid, behenic acid, lauric acid, and 12-hydroxystearic acid
- Y group: Li, Na, Mg, Al, Ca, Zn, and Ba
- Z group: HFC, HFE, and HFO

A melting point of the surface layer 5 is preferably 70°C or higher.

As an agent for forming the solid lubricating coating film 3 of the present embodiment, the following agents are used.

That is, the agent is formed by dispersing a solid lubricant in a binder resin as a matrix component, and 90 wt% or more of the binder resin is a polyamideimide resin. In the agent, an average molecular weight of polyamideimide is 20,000 or more and 40,000 or less, 80 wt% or more of the solid lubricant is polytetrafluoroethylene (PTFE), and an average molecular weight of PTFE is 30,000 or less. In addition, the agent contains a solvent component.

In addition, in a case where the solid lubricating coating film of the present disclosure is formed on both the box and the pin, a film thickness preferably satisfies both the following specifications.

- A thickness of each of the solid lubricating coating films formed on both the box and the pin at a crest position of the thread portion is 5 um or more and 95 um or less.
- When the thickness of the solid lubricating coating film formed in the thread portion of the box at the crest position (thread portion) is A1 (um), and the thickness of the solid lubricating coating film formed in the thread portion of the pin at the crest position is A2 (um), it is preferable that the following Expression (1) be satisfied.

$$A1 + A2 \leq 110 \ \mu m \ \cdots \ (1)$$

In addition, in a case where the solid lubricating coating film of the present disclosure is formed on only one of the box and the pin, a film thickness preferably satisfies both the following specifications.

- The thickness of the solid lubricating coating film formed in the thread portion of the oil country tubular goods including the lubricating coating film of the present disclosure at the crest position (thread portion) of the thread portion is 5 um or more and 95 um or less.
- $A + B \leq 110 \ \mu m$, in which A um is the thickness of the lubricating coating film formed in the thread portion of the oil country tubular goods including the solid lubricating coating film of the present disclosure at the crest position, and B um is the thickness of the coating film formed in the thread portion of the oil country tubular goods positioned on an opposite material facing the oil country tubular goods ("0" in a case where there is no coating film).

The configuration of the present embodiment will be described in more detail.

<Binder Resin and Solid Lubricant Contained in Solid Lubricating Coating Film 3>

The specification of each of the binder resin and the solid lubricant contained in the solid lubricating coating film 3 of the present embodiment is based on make-up/break-out conditions of an actual well. That is, the specification of each of the binder resin and the solid lubricant is devised so that the solid lubricating coating film 3 can maintain lubrication even when a large load or a biased load is applied.

Here, under the conditions assumed for the actual well, it is inevitable that a part of the solid lubricating coating film 3 is peeled off at the initial stage of make-up. The debris of the peeled solid lubricating coating film 3 may be locally clogged in a gap between the coupling and the pin 1 and may cause galling. Therefore, it is important that the debris itself of the solid lubricating coating film 3 after being peeled and broken has flexibility and does not aggregate. Further, a composition of the solid lubricating coating film 3 of the present embodiment is experimentally determined so that the debris itself is a film that can be reconfigured by being pressed against the surface of the coupling or the surface of the pin to contribute to lubrication.

The behavior is determined by the combination of the binder resin and the solid lubricant contained in the solid lubricating coating film 3. This can be realized by softness of the film that makes it difficult for the solid lubricating coating film 3 to be peeled off, the flexibility of the debris itself of the solid lubricating coating film 3 after being peeled off and broken, and prevention of the debris itself from aggregating. In order to achieve this, it is important to select the binder resin and to control the molecular weight of the binder resin. In addition, in order to impart lubrication characteristics, it is important to select an appropriate solid lubricant and control the molecular weight of the solid lubricant. When the composition of the solid lubricating coating film 3 is not specified in a specific range, there are the following problems. That is, a material derived from the partially peeled solid lubricating coating film is locally clogged in the gap between the thread portions facing each other, which causes galling. In addition, a stably burnish-like reconfigured lubricating film (lubricating film having a kind of glossy skin) cannot be formed in a seal portion.

From the above viewpoint, in the present embodiment, the binder resin is specified to contain 90% or more of PAI in terms of wt%, and the solid lubricant is specified to contain 80% or more of PTFE in terms of wt%. This is because the solid lubricating coating film 3 contains PAI as a main component of the binder resin and PTFE as a main component of the solid lubricant as specified in the present embodiment, such that lubrication behavior according to the same technical idea as described above can be maintained. When the composition of the solid lubricating coating film deviates from this range, the influences of another agent are superimposed, and an optimal region may not be formed. Furthermore, the main components are specified within the above ranges by evaluation using a new test method (a test method described below).

In addition, the solid lubricating coating film 3 is required not only to keep excellent lubrication but also to have corrosion protection. That is, it is important that the threaded joint does not rust or is not deteriorated even in an environment exposed before being used in an actual well. In addition, heat resistance is also important, and the solid lubricating coating film 3 is preferably a film that withstands a well bottom temperature, that is, a film having a melting point of 200°C or higher, and preferably 250°C or higher.

"Average Molecular Weight of Binder Resin"

An average molecular weight of the binder resin is specified from a range of a combination of PAI used as a main component of the binder resin and PTFE used as a main component of the solid lubricant in consideration of evaluation by a new test method. A molecular weight specification of PAI alone does not affect hardness or peeling described below.

In the present embodiment, the molecular weight of PAI is specified to be 20,000 or more and 40,000 or less on the premise of the above combination.

The reason that the molecular weight of PAI is set to 20,000 or more is that when the molecular weight of PAI is less than 20,000, the film itself becomes too soft, and thus, the solid lubricating coating film 3 tends to be easily peeled off. This is because otherwise the material derived from the peeled solid lubricating coating film is clogged in the gap between the thread portions.

In addition, the molecular weight of PAI is specified to be 40,000 or less because when the molecular weight of PAI exceeds 40,000, the film itself becomes too hard and the film cannot be appropriately peeled off. Therefore, in a case where a large load or a biased load is applied, the solid lubricating coating film 3 tends to be easily completely scraped off.

A more preferred range of the molecular weight of PAI is in a range of 20,000 or more and 30,000 or less. This follows the above reasons.

In the present embodiment, unlike the related art, the stable range of the component of the solid lubricating coating film is appropriately set based on the evaluation in a new test under load conditions (large load and biased load conditions) as assumed in an actual oil/gas well in which the pin 1 having a length of 8 to 12 m class is vertically suspended and made up. That is, in the present embodiment, it has been confirmed by a new evaluation test under conditions required to withstand a large load and a biased load in the actual well conditions or more severe conditions. Then, upper and lower limits of the molecular weight of PAI were examined and set based on the confirmation results. Specifically, it has been considered that the film is neither too hard nor too soft, and the film is not clogged and does not cause galling when the peeled material derived from the solid lubricating coating film 3 is reconfigured at the time of make-up/break-out. Based on this viewpoint, the combination of the agents (binder resin and solid lubricant) was experimentally selected under the condition in which the number of times of M/B can be increased.

"Constituent Elements Other Than Main Component (PAI) in Binder Resin"

The binder resin may be formed of only PAI.

The binder resin of the present embodiment may contain impurities or additives as long as they are less than 10% of the weight of the binder resin.

Here, at the time of the production of PAI, impurities contained in a hydrogen chloride scavenger in a polymerization solution and an inorganic salt used as a neutralizing agent thereafter may remain. Examples of the impurities include NaCl, $FeSO_4$, inorganic cations themselves, and hydrogen chloride (HCl). These impurities may adversely affect deterioration of the solid lubricating coating film 3 at the time of long-term storage. However, a content of less than about 10%, and preferably less than about 1% is acceptable.

In addition, additives such as a glass fiber and a carbon fiber may be positively added to and filled in the PAI resin to increase the film hardness. In this case, it is possible to prevent the solid lubricating coating film 3 from being peeled off more than necessary due to unavoidable play at the initial stage of make-up of the connection or at the late stage of break-out in the make-up/break-out process of the actual well. As described above, the hardening of the film may positively work. However, the binder resin having excessively enhanced film hardness rejects containing PTFE in the solid lubricant and can contain only a small amount of PTFE. In addition, the binder resin itself tends to be too hard. In a case where the binder resin is too hard, the peeled debris is not uniformly generated, but local peeling tends to be increased. Therefore, the basic matter of forming a secondarily reconfigured film having lubricity, which is reconfigured at the time of make-up/break-out, based on the peeled debris, is inhibited. Then, as a result of evaluation based on the experimental results, it has been found that 90 wt% or more of the binder resin is required to be formed of the PAI resin.

"Average Molecular Weight of Solid Lubricant"

For the following reasons, PTFE is used as a main component of the solid lubricant, and the average molecular weight of PTFE is 30,000 or less.

This is because it is presumed that when the molecular weight of PTFE is increased, the technical idea that the molecules of PTFE slide with each other to maintain high lubrication cannot be maintained. That is, it is presumed that when the molecular weight of PTFE is increased, the molecules of PTFE are entangled with each other, and frictional resistance is increased. Further, the specification that the average molecular weight of PTFE is 30,000 or less is based on the evaluation that the number of times of M/B can be increased by confirmation with a new test under the condition assuming the actual use of the threaded joint for oil country tubular goods.

The average molecular weight of PTFE is more preferably 15,000 or less and still more preferably 10,000 or less. This is to achieve low friction by reducing the average molecular weight of PTFE. These specified ranges can be experimentally derived using a new evaluation test method.

However, the solid lubricating coating film 3 of the present embodiment does not achieve lubrication of the threaded joint for oil country tubular goods with only the solid lubricant. PTFE as the solid lubricant is dispersed in the binder resin and distributed in the solid lubricating coating film 3, and serves as the main point that realizes lubrication as the binder resin is partially peeled off, broken, or deformed. Therefore, it is important that the solid lubricating coating film 3 realizes lubrication not only by the molecular weight of PTFE but also by the combination with the molecular weight of the binder resin. From this viewpoint, the molecular weight of PTFE is specified in the optimal range based on the combination of PTFE and PAI, and thus, the molecular weight of PTFE is specified by confirmation in an actual evaluation test.

"Constituent Elements Other Than PTFE in Solid Lubricant"

The solid lubricant may be formed of only PTFE. The solid lubricant may contain agents other than PTFE as long as it is less than 20% in terms of weight ratio.

Examples of the other agents include fluorine-based PFA (tetrafluoroethylene-perfluoroalkyl vinyl ether copolymer), FEP (fluorinated ethylene propylene, that is, hexafluoropropylene-tetrafluoroethylene copolymer), graphite, BN, MCA (melamine cyanurate), mica, and talc.

The addition of $MoS_2$ and $WS_2$ may be a source of $H_2S$ in an oil/gas production site, and thus, $MoS_2$ and $WS_2$ are not actively mixed. However, $MoS_2$ and $WS_2$ may be mixed at a trace amount level. However, in a case where it is determined by future research and development that there is no problem with $MoS_2$ and there is no limit in addition, the addition of $MoS_2$ and $WS_2$ will also be allowed as long as the amount thereof is less than 20% as specified in the present invention.

"Material Derived from Solid Lubricating Coating Film Reconfigured at Time of Make-up/break-out"

The solid lubricating coating film 3 contains the binder resin and the solid lubricant specified in the present embodiment in combination as described above, such that even when a part of the solid lubricating coating film 3 is inevitably scraped or peeled off at the time of the make-up/break-out, debris thereof reforms a new lubricating film on the surfaces (tightening surfaces 10) of the male thread 1a and the female thread 2a, and the effect of holding lubrication is obtained. From the viewpoint of promoting the additional effects, the optimal ranges of the solid lubricant component and the binder resin component described above are effective.

Here, it is preferable that a discolored band having a burnish-like color tone, a so-called glossy discolored band, be formed at positions corresponding to connection seals on both the male thread 1a and the female thread 2a for one round without interruption after the make-up/break-out. Therefore, lubrication in the second and subsequent make-up/break-out processes is improved. In addition, even in a case where the solid lubricating coating film 3 is formed only on the tightening surface 10 of any one of the male thread 1a and the female thread 2a, the film to be peeled off and reconfigured is formed by overlapping a film to be formed in the thread portion in which the solid lubricating coating film 3 is not formed or a lubrication assist film formed on the solid lubricating coating film 3, in addition to the solid lubricating coating film 3. However, the main point of the lubrication is the solid lubricating coating film 3. Therefore, a range of excellent lubricating characteristics can be specified by specifying the optimal range in the molecular specification.

Here, when the solid lubricating coating film 3 that is inevitably scraped or peeled off at the time of one make-up/break-out is reconfigured, the peeled solid lubricating coating film 3 may be caught in the gap between the male thread 1a and the female thread 2a or the gap between the seal portions, which causes galling. In order to prevent the so-called "scraped debris" from causing galling, it is preferable to perform control so that the "scraped debris" satisfies one of a condition of a thickness of less than 50 um and a condition of a band-like shape having a length of 50 mm or less. In addition, separately from or in addition to these conditions, in a case where the "scraped debris" is massive, the thickness of the largest length portion may be controlled to be 5 mm or less.

In a case where the "scraped debris" is band-shaped, it is important not to make the thickness of the "scraped debris" larger than necessary. When the thickness exceeds 50 $\mu$m, galling tends to easily occur. In addition, when the band-like length exceeds 50 mm, possibility of galling at a thread groove is increased in many cases.

In addition, the case where the "scraped debris" is massive means that the debris has a yarn or cotton shape. In a case where the "scraped debris" is massive, when the length exceeds 50 mm at the time when the surface of the broken out thread is viewed, galling is likely to occur. Actually, when the thread is touched, slight galling may occur in the thread. Galling occurs because the massive "scraped debris" whose length exceeds 50 mm is clogged.

The size of the "scraped debris" is experimentally determined. In addition to improvement of the lubrication itself by specifying the molecular weight or amount mixed of the constituent component of the lubricating film, at the same time, the size of the "scraped debris" derived from the peeled pieces is not made larger than necessary. Therefore, galling is suppressed and lubrication is maintained, and as a means for achieving the conditions of the "scraped debris", the molecular weight or mixing ratio is specified as described above for the achievement.

"Solvent Component of Agent"

The agent for forming a solid lubricating coating film contains a solvent component.

The solid lubricating coating film 3 is formed by (co)polymerizing the binder resin component while dispersing the solid lubricant component. The solid lubricating coating film 3 can be formed by applying an agent obtained by dispersing these components in a solvent to the tightening surface 10 and drying the agent.

The agent for forming the solid lubricating coating film 3 contains a solvent-based agent in which a solid lubricant component and a binder resin component are dissolved in a solvent. The solvent does not remain after the solid lubricating coating film 3 is formed.

The solvent used for the agent is not particularly limited. Any solvent is included in the present disclosure. Examples of the solvent include high boiling point polar solvents such as N-methylpyrrolidone (NMP), dimethylacetamide (DMAC), dimethylformamide (DMF), and $\gamma$-butyrolactone, ketones such as methyl ethyl ketone (MEK) and methyl isobutyl ketone (MIBK), ester-based agents such as ethyl acetate, butyl acetate, aromatic toluene, and xylene, a cyclic ether such as tetrahydrofuran (THF), and a cyclic hydrocarbon such as n-hexane.

In addition, as the solvent, an alcohol such as methanol, ethanol, isopropyl alcohol (IPA), or the like, which is considered to be incompatible with the main binder resin component: PAI of the present disclosure, may be mixed as long as it is contained in a trace amount. When the amount thereof is less than 30% in the solvent component, the solvent may be mixed or mainly used.

The solid lubricating coating film 3 is formed by applying an agent to the tightening surface 10 of the thread portion by spraying, dip coating, brush coating, or the like and then drying the agent. The drying method may be any of sintering, infrared irradiation, far infrared irradiation, ultraviolet irradiation, and hot air drying. The surface on which the solid lubricating coating film 3 is formed (tightening surface 10) necessarily has a thread portion, and may be formed on other adjacent portions.

"Surface on which Solid Lubricating Coating Film 3 Is Formed (Tightening surface 10)"

In a case of a T&C type coupling (female thread 2a side), it is particularly preferable that the surface on which the solid lubricating coating film 3 is formed be only an inner diameter surface on which the thread is formed (tightening surface 10).

In many cases, a single color paint is applied to the surface of the outer surface side of the coupling, or a color band is applied for identification. However, the solid lubricating coating film 3 of the present embodiment is resin-based. When the resin is painted, the resin tends to be easily peeled off. Therefore, in the case of the T&C type coupling (female thread 2a side), the surface on which the solid lubricating coating film 3 is formed is preferably limited to the inner surface side having a thread (thread surface side).

"Optimal Range of Wt% of Solid Lubricant PTFE in Solid Lubricating Coating Film 3"

In addition to the specification of the binder resin and the specification of the solid lubricant, the weight of PTFE with respect to the total weight of the solid lubricant is preferably 20% or more and 50% or less.

A proportion of the constituent weight of PTFE to the total weight of the solid lubricating coating film 3 is associated with securing lubricity of the solid lubricating coating film 3 and is also associated with the hardness of the solid lubricating coating film 3.

When the constituent weight of PTFE with respect to the total weight of the solid lubricating coating film 3 is less than 20%, the amount of PTFE as the solid lubricant component in the solid lubricating coating film 3 is too small, such that it may be difficult to maintain excellent lubrication. In particular, in evaluation under severe conditions assuming a condition in which three pins 1 are connected to form an actual size pin, when the constituent weight of PTFE is not 20% or more with respect to the total weight of the solid lubricating coating film 3, a galling risk is increased. As described below, the evaluation may be performed by a weight tong test using a weight assuming that three pins are connected to simulate the lubrication state of the actual size pin 1.

On the other hand, the reason that an optimal upper limit value of the constituent weight of PTFE is set to 50% or less is as follows. That is, the solid lubricating coating film 3 tends to be soft as the constituent weight of PTFE is increased. When the constituent weight of PTFE exceeds 50%, the solid lubricating coating film 3 is likely to be peeled off due to the influence of the specified combination of PAI of the binder resin at the time of make-up/break-out, which causes an increase in risk of galling.

However, as described above, the condition is specified to maintain high lubrication even assuming an extremely severe condition with an actual pin obtained by connecting three pins. Therefore, in the case of the threaded joint adopted under a less severe condition than the severe condition in which an actual pin obtained by connecting three pins is used, the range of the constituent weight of PTFE can be set to a range higher than the above range.

"Optimal Range of Hardness of Solid Lubricating Coating Film 3"

The hardness of the solid lubricating coating film 3 is preferably F or higher and 4H or lower in terms of pencil hardness.

The hardness of the solid lubricating coating film 3 is mainly determined by hardness of the binder resin. However, a small amount of the solid lubricant is mixed with the binder resin, and the film hardness is increased. On the other hand, when the solid lubricant is excessively mixed, the film becomes soft. As such, the hardness of the solid lubricating coating film 3 can be controlled by the binder resin itself and a mixing method of the binder resin and the solid lubricant.

In the present embodiment, the pencil hardness of the solid lubricating coating film 3 is determined by a method specified in JIS K 5600-5-4 (1999). It is written in the corresponding standard that this standard is a translation of the "ISO/DIS 15184, Paints and varnishes - Determination of film hardness by pencil test" standard. However, the hardness applied in the present embodiment is evaluated based on the JIS standard.

The specification of the optimal range of the pencil hardness is also intended to specify a preferred range in which high lubrication can be maintained even under severe lubrication conditions, specifically, under extremely severe conditions such as conditions in which an actual size pin is obtained by connecting three pins as described above.

In the present embodiment, the solid lubricating coating film 3 contains PAI and PTFE as main components. Therefore, it is based on the idea that it is important to maintain the hardness of the solid lubricating coating film itself to be increased.

Here, the pencil hardness of the solid lubricating coating film 3 is preferably high. However, when the pencil hardness of the solid lubricating coating film 3 is higher than 4H and is hard, the solid lubricating coating film 3 is too hard. Therefore, when a large load or a biased load is applied to the solid lubricating coating film 3, the solid lubricating coating film 3 may be completely peeled off. Therefore, an upper limit value of the solid lubricating coating film 3 is set to 4H. In addition, when the pencil hardness of the solid lubricating coating film 3 is lower than F, the amount of material derived from the peeled solid lubricating coating film 3 is too large. Therefore, since there is a high concern that the debris is locally clogged in the gap between the thread portions to induce galling, a lower limit of the pencil hardness of the solid lubricating coating film 3 is set to F.

"Thread Surface on which Solid Lubricating Coating Film 3 Is Formed"

In the present embodiment, the solid lubricating coating film 3 is formed on one tightening surface 10 of the female thread 2a or the male thread 1a, or on both the tightening surfaces 10 of the female thread 2a and the male thread 1a.

A part of the solid lubricating coating film 3 of the present embodiment is inevitably peeled off according to the make-up/break-out, and a material derived from the solid lubricating coating film (debris) is reconfigured and the lubrication is thus maintained. Therefore, the solid lubricating coating film 3 may be formed on one tightening surface 10 of the female thread 2a or the male thread 1a, or on both the tightening surfaces 10 of the female thread 2a and the male thread 1a. When the reaction of "reconfigured and the lubrication is maintained" proceeds exactly, excellent lubrication can be realized when the solid lubricating coating film 3 is formed on the tightening surface 10 of at least one of the female thread 2a and the male thread 1a.

"Tightening surface 10 of Thread on which Solid Lubricating Coating Film 3 Is Not Formed"

Here, a case where the solid lubricating coating film 3 is formed on only the tightening surface 10 of either one of the male thread 1a and the female thread 2a will be described.

The tightening surface 10 of the thread on which the solid lubricating coating film 3 is not formed may be in a state of a surface formed by thread processing or may be subjected to shot blasting. Alternatively, it is preferable that the tightening surface not be subjected to shot blasting, and a film having corrosion resistance is formed by a paint base film or a film having corrosion resistance is formed by a paint base film after shot blasting. The film having corrosion resistance is used to impart corrosion resistance. In particular, in a case where a surface of a carbon steel thread is cut as it is or shot blasted, corrosion may easily occur. In addition, in consideration of adhesion of the coating film, it is preferable to form a paint base film by shot blasting. Corrosion is prevented by forming a corrosion-resistant film.

In addition, the formation of the film having corrosion resistance can also be expected to have an effect of improving lubrication as compared with a case where a metal surface of the thread is exposed. In a case where a part of the film having corrosion resistance is broken or completely scraped off at the time of make-up of the connection, the debris of the film having corrosion resistance is solidified to cause a lump, and the debris sandwiches the gap between the threads, which inhibits lubrication. However, when an appropriate paint base film is selected as the film having corrosion resistance, the lubrication behavior can be set to be equal to or higher than that of the film having corrosion resistance.

"Surface Layer 5"

The surface layer 5 included in the lubricating coating film may be provided on an upper surface of the solid lubricating coating film 3 formed on the tightening surface 10. By providing the surface layer 5, more preferred lubrication characteristics can be maintained. The surface layer 5 as a film of the uppermost layer is particularly effective for oil country tubular goods having a standard of 7" or more. The surface layer 5 is effective for supplementing and maintaining the lubrication.

The surface layer 5 does not enhance the lubrication of the solid lubricating coating film 3 itself.

In a case where the male thread 1a is set to an appropriate position with respect to the female thread 2a, even when both axes are intended to be set straight, the axes may be set slightly obliquely in an actual well. In this case, the surface layer 5 contributes to sliding the male thread 1a at the time of make-up and shifting to the original stable position in the threaded joint. Therefore, the surface layer 5 contributes to realizing lubrication that can be originally exhibited by the solid lubricating coating film 3, thereby supporting the lubrication by the solid lubricating coating film 3.

The surface layer 5 is developed on the upper surface of the solid lubricating coating film 3 in a thin and acquired manner. The surface layer 5 is merely placed on the surface of the solid lubricating coating film 3. Therefore, the surface layer 5 is not in close contact with the solid lubricating coating film 3 due to a physical anchor effect or the like, and the layer is not those which chemical composition is changed at the interface to be gradually shifted.

One of the features of the present invention is based on the finding that, as emphasized many times, the solid lubricating coating film 3 is inevitably uniformly and partially peeled off. Then, the material derived from the solid lubricating coating film (debris) is uniformly reconfigured as a lubricating film, and the solid lubricating coating film 3 is designed so as not to be locally clogged, such that the lubrication is maintained. The surface layer 5 is provided in order to reduce the amount of the solid lubricating coating film 3 partially peeled off at the time of make-up/break-out and to make the material derived from the solid lubricating coating film 3 uniform as compared with the case where the surface layer 5 is not provided.

Here, a coupling on which the surface layer 5 was formed and a coupling on which the surface layer 5 was not formed were prepared on the coupling on which the solid lubricating coating film 3 was formed. In addition, a coupling in which the solid lubricating coating film 3 was not provided on the side of the pin 1 and the surface simply threaded was subjected to shot blasting was prepared. Then, a single make-up/break-out test was performed by a vertical make-up machine. As a result, in a case where the surface layer 5 was provided, the solid lubricating coating film 3 formed on the coupling was uniformly reconfigured and uniformly transferred. On the other hand, in a case where the surface layer 5 was not formed, the solid lubricating coating film 3 formed on the coupling was slightly inhomogeneously transferred as compared with the case where the surface layer 5 was provided. As such, in the case where the surface layer 5 was provided, the results suggesting that the solid lubricating coating film 3 was uniformly peeled off were obtained. As the solid lubricating coating film 3, a film based on the present embodiment was used.

"Composition of Surface Layer 5"

The agent for forming a surface layer contains a mixture of a solid lubricant, a binder resin, and a solvent component that does not remain in the coating film after coating of the coating agent.

The solid lubricant for forming the surface layer may be formed of, for example, one or a combination of two or more kinds of compounds containing fatty acids of the following X group and metal elements of the following Y group.

The binder resin for forming a surface layer is formed of, for example, a fluorine-based organic compound.

The solvent component for forming a surface layer is formed of, for example, one or a combination of two or more selected from fluorine solvents of a Z group.

X group: stearic acid, behenic acid, lauric acid, and 12-hydroxystearic acid
Y group: Li, Na, Mg, Al, Ca, Zn, and Ba
Z group: HFC, HFE, and HFO

Here, the compound composed of the X group and the Y group forms solid lubrication by a soap component and a metal soap (reaction soap) alone or in combination thereof.

The surface layer 5 of the present embodiment is formed of a quick drying paint in which these solid lubricant components are dispersed in a binder resin of a fluororesin-based organic compound to improve lubricity of the solid lubricating coating film 3 of the present embodiment.

In an actual well, oil country tubular goods may be used in an environment in which neutral muddy water or alkaline water mainly containing drilling mud coexists. The environment can also be an environment filled with moisture. Therefore, it cannot be expected that the oil country tubular goods are lubricated simply by sprinkling or applying a soap component, a metal soap component, or the like to the surface, which is common in other fields. This is because the soap component, the metal soap component, or the like is washed away, and further improvement of lubricity cannot be achieved. In addition, when the soap comes into contact with an acidic chemical solution (water), the soap flows through the site and reacts with the acidic chemical solution, and thus, the soap loses its effect.

Therefore, as the agent for a surface layer, a paint in which the components described above are dispersed in a binder resin was used. In a case where the agent for the surface layer 5 of the present embodiment is used, it is possible to eliminate the concern of melting and flowing by taking the agent into the film and holding the agent in the film.

The agent for the surface layer 5 may be applied onto the solid lubricating coating film 3 in a solid lubricating coating film production line in a state where the solid lubricating coating film 3 is formed in advance. In addition, the agent for the surface layer 5 may also be applied onto the solid lubricating coating film 3 before running in an actual well that is the site. In a case where the agent for the surface layer 5 is applied before running in an actual well, the agent for the surface layer 5 is required to have quick drying properties. Therefore, the solvent component in the agent for the surface layer 5 was formed of one or a combination of two or more selected from the fluorine solvents of the Z group.

In addition, similarly, the binder resin for the surface layer 5 is designed to withstand quick drying, and is formed of a fluorine-based organic compound.

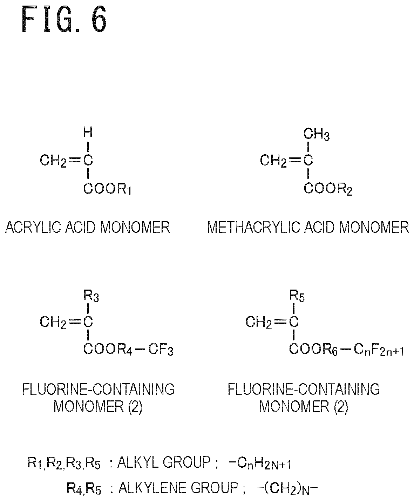

The fluorine-based organic compound remaining as a film as the solid content (binder component) of the surface layer 5 is not particularly specified, and contains any fluororesin. For example, examples of an agent containing a fluorine-containing monomer include an agent heavily associated with an acrylic aid or a methacrylic acid ester. What is important here is an agent containing a fluorine-containing monomer, and an agent itself having a methacrylic acid alkyl ester structure is more preferable. That is, a resin in which in the fluororesin monomer 1 of FIG. 6, R3 is a methyl group ($-CH_3$) and the number of carbons of an alkylene group of R4 is 0 to 3 is particularly preferable as a binder resin that holds a soap or metal soap formed of a fatty acid and a metal element. That is, among methyl methacrylate-based, ethyl methacrylate-based, propyl methacrylate-based, and butyl methacrylate-based resins, a resin whose terminal is modified with F is particularly preferable as a binder resin that holds a soap or metal soap formed of a fatty acid and a metal element.

In addition, it is desirable that the binder resin for the surface layer 5 withstands a temperature of 220°C or higher and preferably 250°C or higher. In the lubrication of the solid lubricating coating film 3, in a case where lubricity is poor, the seal portion generates heat from the thread portion, and thus, it is more preferable that a temperature in which the solid lubricating coating film 3 is usable be higher. However, in consideration of conditions for use in an actual well, that is, in a case where the oil is left in the well for a long time after make-up is performed and oil production begins, the oil is not lifted on the ground unless a timing of work over or the like or a problem with the well occurs. However, considering that it can be assumed that the surface layer 5 formed on the solid lubricating coating film 3 does not function due to denaturation when installed in a well in a difficult environment at a high temperature, it is desirable that the binder resin withstand a temperature of 220°C or higher and preferably 250°C or higher.

In the surface layer 5 formed on the outermost surface, the weight of the metal content of the solid lubricant contained in the surface layer 5 is preferably 2% or more and 25% or less with respect to the total weight of the binder resin-containing film included in the surface layer 5 formed on the outermost surface. In addition, it is preferable that the surface layer 5 have a melting point of 70°C or higher, and have a lower temperature value of a boiling point and a decomposition temperature of 250°C or higher. The weight of the metal content in the solid lubricant contained in the surface layer 5 is more preferably 5% or more and 15% or less. In addition, it is more preferable that the surface layer 5 have a melting point of 70°C or higher, and have a boiling point and a decomposition temperature of 300°C or higher.

The preferred ranges are specified based on the results of experimental data.

It is considered that the specification of the preferred ranges is caused by the following. That is, what is important in the surface layer 5 is first a melting point (softening point). That is, there is a possibility that the soap and the metal soap are decomposed and blackened by heat generated by make-up/break-out, and thus, the function is not performed. In view of this, the reason that the melting point is set to 70°C or higher is as follows. That is, even when galling does not occur at all, the solid lubricating coating film 3 is slightly scraped as the make-up/break-out is repeated. Accordingly, this is because a slight amount of heat tends to be accumulated, and it is required to consider heat generation to the extent that a person can touch the pipe with work gloves. Therefore, the melting point was set to 70°C or higher.

The physical property value depends on the metal element and the fatty acid moiety bonded thereto. Then, the soap and the metal soap component may be obtained using components selected from the X group and the Y group.

The reason that the weight of the metal content of the solid lubricant is preferably 2 to 25% with respect to the total weight of the components contained in the solid lubricant, that is, the metal soap and the soap, is as follows. When the content is less than 2%, the influence of the metal element bonded to the fatty acid is small, and it cannot be expected to support the lubrication. In addition, when the content exceeds 25%, on the contrary, the influence of the metal element is too large, and it cannot be expected to support the lubrication.

In this case, in a case where the melting point (softening point) is too low, it is also acceptable as an auxiliary role to synthesize the metal soap by adding a carboxylic acid having a short hydrocarbon chain such as acetic acid or propionic acid to the fatty acid in order to increase the melting point (softening point). However, it is possible to further improve and support the lubrication of the solid lubricating coating film 3 by containing components of the X group and the Y group as main components.

In a case where a carboxylic acid having a short hydrocarbon chain is used for the purpose of preventing the melting point (softening point) from being too low (changing the melting point to be high), it is preferable to limit the carboxylic acid having a short hydrocarbon chain to 20% or less of the carboxylic acid used. When the content exceeds 20%, it is difficult to achieve the original meaning of "to further improve and support the lubrication of the solid lubricating coating film 3". For the support for the lubrication of the solid lubricating coating film 3, a carboxylic acid having a longer hydrocarbon chain as specified in the B group is advantageous for the soap/metal soap focused on slipping. This is because the carboxylic acid having a short hydrocarbon chain has only the function of increasing the melting point (softening point), the boiling point, and the decomposition temperature.

In addition, in the surface layer 5, it is desirable that the content weight of the solid lubricant contained in the surface layer 5 be 0.1 times or more and 10.0 times or less the content weight of the binder resin contained in the surface layer 5 formed on the outermost surface. When it is less than 0.1 times, the influence of only the binder resin is strong, and the effect of improving lubrication is not obtained. On the other hand, when it exceeds 10.0 times, the solid lubricant component is too large to be formed as a film, and when the solid lubricant is exposed to water or the like, the solid lubricant exposed to the surface begins to melt, and the effect of supporting the lubrication of the solid lubricating coating film 3 cannot be expected.

Furthermore, it is desirable that the agent be applied so that the weight of the agent applied for the surface layer is 0.01 mg/mm$^2$ or more and 1 mg/mm$^2$ or less. When it is less than 0.01 mg/mm$^2$, the effect may not be expected. In addition, when it exceeds 1 mg/mm$^2$, the effect may be saturated, and in a case where the agent is applied in an amount of more than 1 mg/mm$^2$, when the surface layer is partially peeled off in the make-up/break-out process, the object derived from the peeled piece may be clogged. The applied weight is a numerical value defined by the applied region.

In addition, the surface layer may not be applied to the entire surface of the solid lubricating coating film 3. For example, the solid lubricating coating film 3 itself tends to be most broken at the time of make-up/break-out. Therefore, the surface layer may be formed on only a surface of a portion where an object derived from the peeled piece is likely to be generated, specifically, a portion having a region that is mainly in contact with the pin 1 connection (male thread 1a) and the coupling connection (female thread 2a) when being fitted or a potion having a seal portion.

"Base Treatment of Solid Lubricating Coating Film 3"

It is preferable to perform a base treatment between the solid lubricating coating film 3 and the tightening surface 10 forming the solid lubricating coating film 3 to form the base film 4 contained in a surface treatment film.

The base film 4 is formed by, for example, a phosphate treatment or an electroplated film formed by an electroplating treatment. By providing the base film 4, the formation and adhesion of the solid lubricating coating film 3 can be stabilized, and the number of times of M/B can be improved.

In a case where the oil country tubular goods are formed of carbon steel, the base film 4 may be either a film formed by a phosphate treatment or an electroplated film. In a case where the oil country tubular goods are a stainless steel pipe or a high alloy pipe, the base film 4 may be formed of an electroplated film. However, the electroplated film includes, for example, a thin plating layer called Ni flash plating.

The base film 4 is preferably a film having a high hardness. In a case of a soft film such as a Cu electroplated film, a risk of galling is increased. Therefore, it is desirable that the base film 4 have a high hardness. In a case where the base film 4 is a soft film, it is preferable that the base film 4 not be provided. This is because when there is a soft film under the solid lubricating coating film 3, the solid lubricating coating film 3 is peeled off completely, and lubrication cannot be maintained.

Specifically, the hardness of the base film 4 is desirably 200 HV or higher in terms of HV hardness. This is because the number of times of M/B tends to be increased when the hardness of the base film 4 is high.

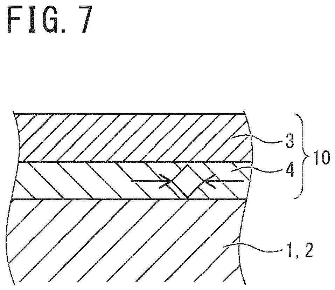

Even in a case where the base film 4 is thick at the surface layer, a film thickness does not reach 20 um. In many cases, the film thickness is about 10 um. Therefore, the HV hardness defined here is assumed to be a Vickers hardness measured by observing the base film 4 from a cross-sectional direction with an embedded cross-sectional microscope. In many cases, a pressing load of the Vickers hardness cannot be measured unless the pressing load is 1 kgf or less. However, as illustrated in FIG. 7, it is defined that a Vickers indentation is calculated from a diagonal length in a direction perpendicular to a film thickness direction under the essential condition that the Vickers indentation enters the base film 4 in the film thickness direction. Here, a conversion table according to the JIS standard JIS Z2244 (2009) is used. Although an indentation size deviates from a rule of a distance from the adjacent solid lubricating coating film 3 or a base material, it is assumed that the indentation size is defined by the above method. This is because, when the rule for separating a certain distance is strictly applied, the pressing load becomes too low, the data causes variation, and the accuracy is not obtained. In the case of metal plating, the measurement was performed with N = 3, and the average was taken. In the case of the phosphate treatment, the base film is formed of a granular aggregate having a square shape (cubic shape and rectangular parallelepiped shape), a hemispherical shape, and an oval shape. Therefore, since the variation was large, measurement was performed with n = 5 or more, and evaluation was performed with an average of n = 3 or more, excluding data in which HV deviated from 50.

In a case where the base film 4 as the base treatment film is a high hardness film, when the solid lubricating coating film 3 is formed on the base film 4, the lubrication behavior is excellent. On the other hand, when a soft film having less than 200 HV is provided on base film 4, lubrication tends to be rather deteriorated. This is because, as shown in Examples, when the solid lubricating coating film 3 of the present embodiment is formed on a soft base film 4 (base plating) of about 70 HV to 150 HV such as a Cu plated film, the solid lubricating coating film 3 is peeled off completely and galling occurs at the time of make-up/break-out. This phenomenon is not a problem in the method of applying a compound according to the related art, but it is required to be careful when obtaining lubrication by the solid lubricating coating film 3.

On the other hand, in a case where the base film 4 is not provided, for example, in a case where the solid lubricating coating film 3 is formed directly in the thread, there is no problem in lubrication. That is, in a case where the solid lubricating coating film 3 is formed in the thread, excellent lubrication is realized. Further, in a case where the base film 4 having 200 HV or higher is provided, further preferred lubrication is realized by forming the solid lubricating coating film 3 of the present embodiment. However, in a case where the base film 4 having less than 200 HV is provided, even when the solid lubricating coating film 3 of the present embodiment is formed, the solid lubricating coating film 3 is broken at the time of make-up/break-out, and lubrication tends to be rather deteriorated.

"Method of Evaluating Lubrication of Solid Lubricating Coating Film 3"

A method of evaluating lubrication of the solid lubricating coating film 3 was performed by a new test method described below capable of performing a simulation test in a laboratory using the short pin 1 as a test pin 1. Test evaluation may be performed using a pin having a length corresponding to one actual size pin (8 to 12 m class) to three connected pins. However, in consideration of performing a plurality of types of evaluations, the following new test method was preferable.

That is, in evaluating the upper and lower limit ranges of the technical elements constituting the present invention, the test method newly conceived by the present inventors was applied.

"New Test Method"

Next, a newly conceived test method will be described.

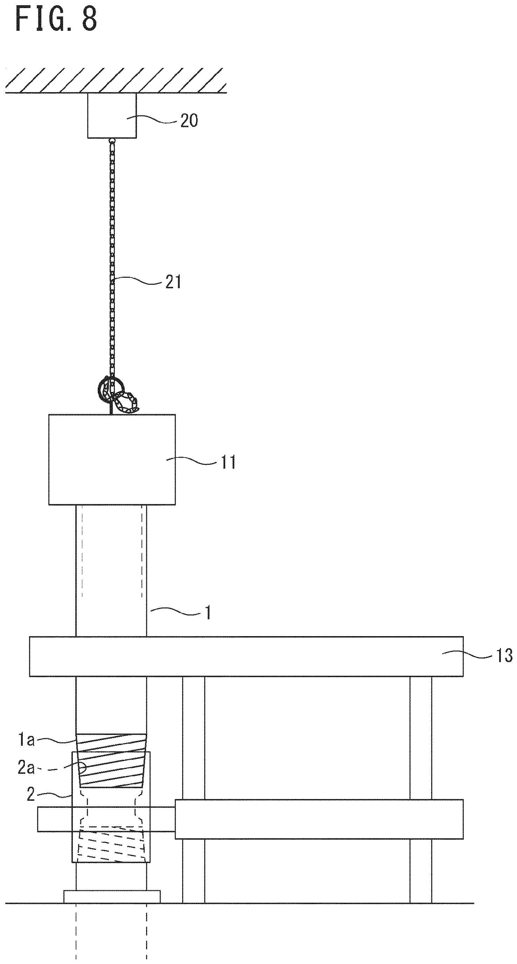

In the test method adopted in the present embodiment, a short pin shorter than an actual length of a pin (pin to be evaluated) used in an actual well is used as the test pin 1, and as illustrated in FIG. 8, the short pin 1 is attached to an upper portion of a coupling (box 2) installed with an axis facing up and down. This is a make-up/break-out test method of performing make-up/break-out with vertical power tongs 13.

However, in the new test method, the following conditions A and B are adopted.

(Condition A) A weight 11 is attached to an upper portion of the test pin 1. A weight of the weight 11 is equal to or more than a weight of the pin to be evaluated (the pin used in the actual well).

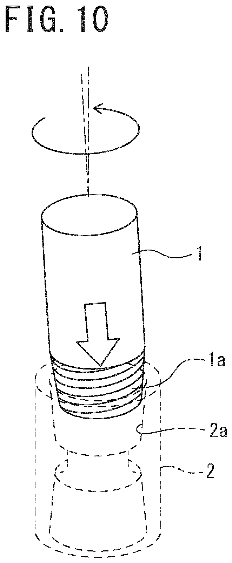

(Condition B) An initial set position that is a make-up start position before making up when the test pin 1 is made up with the vertical power tongs 13 is set to a looser position than that of the related art. Specifically, for example, the initial set position is set to a state in which the number of threads of the test pin 1 exposed from the upper end surface of the box 2 is equal to or greater than the larger number among the number of threads of the test pin 1 of 5 and the number corresponding to 1/4 of the total number of threads of the pins 1 (see FIG. 10).

In FIG. 8, a reference numeral 20 denotes a crane, and a reference numeral 21 denotes a chain.

The load by the weight 11 is applied to the pin 1 at the time of make-up, the load by the weight 11 is not applied to the pin 1 at the time of break-out, and it is preferable because the conditions become stricter and are closer to the conditions for make-up/break-out in the actual well. In a "weight tong test" in Examples described below, the test was performed by a test method in which the load by the weight 11 is not applied to the pin 1 at the time of break-out. This can be realized, for example, by lifting the weight 11 with respect to the pin 1 at the time of break-out. The pin 1 may be broke out in a state of being lifted together with the weight 11.

In the new test method, as described in Examples, it is confirmed that the evaluation is performed under conditions equal to or more severe than the conditions tested and evaluated using the length corresponding to the actual pin (8 to 12 m class) to the length corresponding to the three connected pins.

Here, in a case where a plurality of pins are connected and made up as in a well on the sea, even when the actual pin is applied to the actual well, the pin is suspended in a derrick lane and make-up/break-out is performed. Certainly, in the most severe conditions, the weight of the actual pin is applied to the female thread 2a, but in a possible situation, the female thread 2a is made up while being suspended. Therefore, it is presumed that the load is reduced to some extent compared to the case where the total weight of the pin is applied to the female thread 2a of the box 2. Therefore, there is an actual state in which a weight of about half of the pin 1 is suspended at a rough estimation. Therefore, even in the evaluation test in a case where three pins to be actually used are connected and used, it has been determined that it is preferable to perform the test in a state where stress of the actual pins or more is applied to the box 2.

In addition, in the make-up/break-out of the threaded joint for oil country tubular goods, the solid lubricating coating film 3 is inevitably peeled off due to the unique "play" and the "self-weight (large load) of the pin 1" biased and in contact with the solid lubricating coating film 3. The peeled pieces (debris) of the solid lubricating coating film 3 is locally clogged, which also directly causes galling. On the contrary, since the peeled pieces derived from the solid lubricating coating film 3 are strongly pressed against the thread surface at the time of make-up/break-out, the peeled pieces may be reconstructed into a lubricating film, and rather the lubrication may be improved. The solid lubricant and the binder resin of the constituent elements of the solid lubricating coating film 3 do not function independently, and a combination thereof realizes high lubrication. Therefore, the specified range of any one of the constituent elements in the past literature cannot be applied as it is, and high lubrication cannot be realized. In order to evaluate the presence or absence of this preferred lubrication in the test, the initial set position was set to be loose without completely made up as in the condition B, and the test was performed as a condition in which the joint portion was more likely to be rattled than in the related art at the time of make-up/break-out.

In the present embodiment, the evaluation of the number of times of M/B is adopted as the lubrication evaluation of the solid lubricating coating film 3 of the threaded joint for oil country tubular goods.

"Specific Configuration of New Test Method"

Next, a new test method will be specifically described.

In the present specification, the new test is also referred to as a weight tong test.

As illustrated in FIG. 8, a make-up/break-out test is performed using power tongs 13 on a threaded joint for oil country tubular goods in which a lower portion (thread portion) of the pin 1 is attached from above to the upper portion (thread portion) of the box 2 fixed with an axis facing up and down. This is because the actual running in the well is performed by setting the female thread 2a downward and setting the male thread 1a upward. In the case of a T&C type threaded joint, the lower side is in contact with the coupling (box 2) and the upper side is in contact with the pin 1. In the case of an integral threaded joint, the lower side is the box 2 and the upper side is the pin 1.

(Test Pin 1)

As the test pin 1, the pin 1 having a shorter length than the actual length pin to be evaluated is used. The test pin 1 was prepared by being cut the actual length pin to be evaluated. The test pin 1 has a length enough to secure a grip portion of the power tongs 13.

(Load Applied by Weight 11)

The weight 11 is attached to an upper portion of the test pin 1, and a make-up/break-out test is performed by applying a load. Under more severe conditions, the test was performed in a way that a weight load was applied at the time of make-up, and the weight load was applied to zero or not applied at the time of break-out, which were conditions close to the make-up/break-out condition in an actual well. The weight of the weight 11 was, for example, equal to or more than the weight of the pin to be evaluated (pin adopted in an actual well).

In the make-up/break-out in the actual well, since the actual length pin is suspended and made up by a derrick crane, the self-weight of the actual length pin is not entirely applied to the box 2. Specifically, at the site, the actual length pin is lowered while the connection is made up, and thus, in principle, it is not possible to completely suspend the pin and reduce the load of the self-weight to zero. Therefore, the weight of the weight 11 used in the test was determined in consideration of the weight that can simulate the maximum applied load. That is, there is a possibility that a load is applied from one actual length pin to up to three actual length pins.

As described above, the application of the applied load was performed by a method of applying a weight load at the time of make-up and applying a weight load of zero, that is, no weight load at the time of break-out. The reason for this is to simulate the make-up/break-out in the actual well, including the damage to the solid lubricating coating film due to the large load application and the biased load based on the rattling, which may occur in the actual well. That is, at the time of make-up, make-up was performed so that the weight 11 was not suspended, that is, a suspended chain 21 was not tensioned, and the load of the weight 11 was applied to the entire amount of the box connection via the pin connection. This is because when a set position before making up a pin connection described below is made up so that the pin connection is exposed from the box thread by about half and the loads of the weight and short pin are applied, it is possible to simulate the adverse effect of a large load and the adverse effect of a biased load associated with rattling as in the make-up of the actual well.

Contrary to the intuition of those skilled in the art, break-out was performed by a method in which the weight 11 was wound up while tension was applied to the suspended chain 21, and the load of the weight 11 became zero, that is, the load of the weight 11 was not applied. When the load of the weight 11 is applied to the pin connection at the time of break-out, contrary to the intuition of those skilled in the art, the load acts as a kind of balancer and the pin connection is loosened straight up. In this case, a biased load associated with rattling cannot be simulated, the solid lubricating coating film is not broken, and the number of times of make-up/break-out tends to be improved. On the contrary, when the weight 11 is wound up around the suspended chain 21 using an overhead crane 20 so as not to apply the load of the weight 11, thereby not applying the tension, the pin connection is loosened while being rattled, the solid lubricating coating film is damaged, and the condition becomes close to the actual well condition. The load of the pin connection and the weight applied to the box connection is applied so as to be zero or close to zero, but includes a non-zero region. The load is also applied so that a strong tension is not applied to the suspended chain 21. Actually, an iron chain or sling is used for the suspended chain 21, but the suspended chain 21 is linearly suspended downward due to its self-weight. Therefore, it is possible to determine whether or not the tension is applied by determining whether or not the suspended chain is suspended or loosened with a swivel (free key) at the upper portion of the weight 11.

(Method of Setting Weight 11 and Shape of Weight 11)

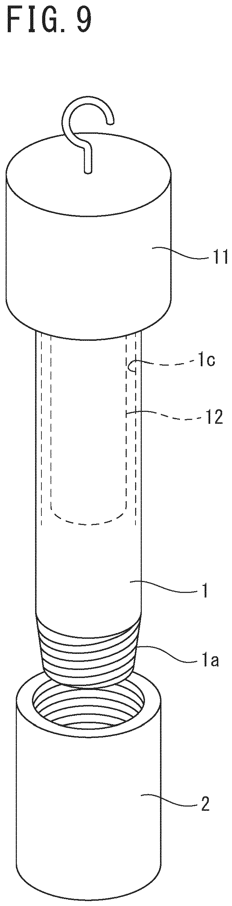

The weight 11 is attached to the upper portion of the pin 1 on the breaking out side of the test pin 1. This is for simulating a situation close to an actual use situation of the connection by applying a load at the time of make-up.
Next, attachment of the weight 11 will be described.
As illustrated in FIG. 9, the weight 11 has a billet-like cylindrical shape whose lower surface is larger than the diameter of the test pin 1. An upper end portion of an insertion rod 12 is integrally fixed to the lower surface of the weight 11 by welding or the like. A diameter of the insertion rod 12 is smaller than a diameter of an inner diameter surface 1c of the test pin 1.
Then, the weight 11 is placed on the upper end of the test pin 1 in a state where the insertion rod 12 is inserted into an upper end opening of the test pin 1 from above.
In this case, the center of gravity of the weight 11 changes eccentrically in a lateral direction according to the deflection of the pin 1 in the lateral direction. In addition, the insertion rod 12 makes it difficult for the weight 11 to fall off from the upper portion of the pin 1.
In addition, a plurality of types of weights 11 having various outer diameters and weights were prepared so that threaded joints having different sizes can be evaluated.

(Initial Set Position of Pin 1)

In this test, the position for setting the male thread 1a of the test pin 1 with respect to the female thread 2a of the box 2 is also important.
In the present embodiment, the initial set position (making up start position) before make-up is defined as a state in which the thread portion is intentionally rattled while the load is applied to the upper portion of the test pin 1 by the weight 11. Then, the actual connection make-up condition can be simulated by making up the connection using the power tongs 13. That is, in the present embodiment, the pin 1 is intentionally set at a position where the pin 1 is not made up to a possible position for tightening.
In the present embodiment, as for an initial set position at the time of make-up in the make-up/break-out test using the power tongs 13, setting was performed as follows. That is, the male thread 1a was inserted into the female thread 2a so as to avoid mismesh (cross thread), and then the connection was tightened by hand, such that even when the connection meshed with each other to some extent and pulled (even when the pin 1 was lifted upward), the connection did not come off. However, the threads not completely mesh with each other. Specifically, the initial set position is set to a position where the number of threads of the pin 1 remained exposed from the upper end surface of the box 2 (coupling end surface) is equal to or greater than the larger number of threads of the pin 1 of 5 or more and the number corresponding to 1/4 or more of the total number of threads of the pin 1 (see FIG. 10).
The reason that the initial set position at the time of loosening tightening is adopted is to realize rattling at the time of make-up/break-out and simulate severe conditions.
Here, when tightening by hand is performed to a position where 1 to 3 threads remain, rattling is not simulated. In a case of a situation where make-up is completed by 1 to 3 rotations, the connection is made up while the pin 1 is simply lowered down, and a situation where the pin 1 connection is in local contact with the coupling connection (the female thread 2a of the box 2) at the time of make-up, which may occur in an actual well, is unlikely to occur. Therefore, make-up is uniformly performed while the pin is in contact with the coupling connection (the female thread 2a of the box 2).
On the contrary, simply inserting the male thread 1a into the female thread 2a may cause a cross thread (stepwise make-up of the connection) at the time of make-up/break-out. Therefore, there is a risk that the intended make-up/break-out test is not performed. In a situation where the solid lubricating coating film 3 formed on the thread surface is broken by the cross thread or the thread itself is damaged, it is impossible to evaluate the lubrication characteristics of the solid lubricating coating film 3. Therefore, the number of threads remaining at the initial set position before make-up needs to be 2/3 or less of the total number of threads.
In the weight tong test of the present embodiment, it is possible to ideally simulate actual make-up/break-out by considering not only load application by the weight 11 but also rattling when the pin 1 is tightened and loosened. Therefore, it was confirmed that the solid lubricating coating film of the present disclosure has excellent lubricity.

(Influence of Film Thickness)

The reason for defining the film thickness is as follows. Since the film becomes more slippery as the lubricant is applied, there is a common sense of the related art that it is better to apply a large amount of the lubricant or apply the lubricant to some extent. Focusing on the common sense of the related art, even when a solid lubricating coating film or a film for rust prevention and lubrication is formed, the film is too thick and tends to be excessively coated. There is a case where galling occurs occasionally in an actual well or a simulated well even with a film thickness that is not problematic in laboratory evaluation.

In the make-up test according to the related art with horizontal or vertical power tongs using short pins in laboratories, the sensitivity is too low to evaluate the optimal film thickness. That is, even a significantly thick film thickness can be determined as acceptable. Again, in the case of using a short pin, the film is less likely to be broken even when the film thickness of the solid lubricating coating film is thick. Therefore, dust derived from the solid lubricating coating film is clogged in the gap between the threads, and galling hardly occurs. This is because the solid lubricating coating film is not damaged at the time of the make-up/break-out test.

Therefore, in many cases, the solid lubricating coating film on the coupling side is often formed at a thickness of 50 to 100 um, and the solid lubricating coating film on the pin side of the film provided for rust prevention and lubrication is often formed at a thickness of about 20 to 100 um. When this is applied to an actual well, there is a mixture of a case where galling occurs and a case where galling does not occur. In many cases, there is no problem with a common film thickness, but when the film thickness deviates from the upper and lower limits of the specified range of the film thickness of the present disclosure, galling may occur immediately in an actual well. Therefore, when make-up/break-out the connection for oil country tubular goods using the solid lubricating coating film in an actual well, a stable lubrication behavior is achieved by appropriately controlling the film thickness.

In an actual well, a large load based on the self-weight of the actual length pin connection is applied to the box connection. Further, the set position of the pin connection at the stage of starting make-up cannot be set so that all the pin connection is completely hidden by the box connection. Therefore, it is necessary to consider that the solid lubricating coating film is damaged because rattling often occurs at the initial stage of make-up and at the end of break-out, and the pin connection swings. When the solid lubricating coating film is thick, the solid lubricating coating film is broken in a region where the spike-like torque of FIG. 2A is raised, and a large amount of secondary products derived from peeled pieces and fragments are generated. Lubricity is maintained when the threads are reattached and reconfigured again. However, when the amount of scraping is large, the gap between the therads is locally clogged, which causes galling.

Therefore, in the present disclosure, the film thickness (referred to as A um) of a film containing a binder resin mainly composed of polyamideimide and a solid lubricant mainly composed of polytetrafluoroethylene (PTFE) is preferably specified to 5 um or more and 95 um or less. The lower limit of the thickness of the solid lubricating coating film as the main object of the present disclosure is specified to the minimum thickness at which lubrication can be maintained, and the upper limit is specified in order to avoid local clogging of secondary products derived from peeled pieces and fragments. The thickness is more desirably 30 to 80 um, and still more desirably 50 to 80 um. The upper and lower limits are determined from experimental facts in a weight tong test described below.

However, this film thickness is a film thickness measured at room temperature before the make-up/break-out test. Deformation occurs at the time of make-up/break-out. Specifically, it should be noted that crush may occur. This film is often used to implement a film having high hardness due to its agent composition, and has a pencil hardness of F or higher and 4H or lower in many cases except for rare cases. Therefore, this hardness range is also specified. In a case where the pencil hardness is lower than F, specifically, in a case where the pencil hardness is HB or lower, since the film quality is soft, the film is significantly crushed at the time of the make-up/break-out test. In this case, once make-up/break-out is performed, the solid lubricating coating film is crushed, and the thickness measured at room temperature does not make sense. Since the film is crushed and has a small thickness, the risk of clogging in the gap between the threads is reduced. For this reason, the lower limit of F or higher was also specified. In addition, the specification of the upper limit of the hardness of 4H or lower was set because the solid lubricating coating film of the composition of the present disclosure could be reached approximately the upper limit of the pencil hardness except for a situation where a specific additive was added. Therefore, an excellent lubrication behavior is further exhibited.

The solid lubricating coating film mainly provided by the present disclosure is formed on one or both of the box connection and the pin connection. The film thickness is specified to A um. Further, a case where the same or different solid lubricating coating films are formed on the facing surfaces (the thickness of one solid lubricating coating film is defined as A1 um, and the thickness of the other solid lubricating coating film is defined as A2 μm), a case where a coating film for rust prevention and lubrication is formed, and a case where a film is not formed are included. The film thickness in this case is specified to B um.

To be precise, local clogging and galling in the gap between the thread as described above are caused by a secondary product. The secondary product is a product in which the films on both sides of the thread are peeled off and broken during make-up/break-out. It is effective to reduce the total amount of the film thickness of the solid lubricating coating film that can be a peeled piece or a coating film applied for rust prevention and/or lubrication to reduce the concern of galling.

It is preferable to specify that A + B ≤ 110 um or A1 + A2 ≤ 110 um. In the former case, the solid lubricating coating film of the present invention is formed only on one of the coupling connection and the pin connection. The latter is the case where the solid lubricating coating film is formed on both the threads. The lower limit of A1 or A2 is "5 um or more", which is the lower limit value of the film thickness definition of the solid lubricating coating film described above. In a case where the solid lubricating coating film is not formed on the surface facing the solid lubricating coating film, since the film is not included and there is a case where the film thickness is zero, B is specified to "0 μm or more".

The upper limit specification of 110 um is related to the fact that the thread portion (crest portion) of the pin connection and the valley portion (root portion) of the box connection are 100 to 150 um free in the design of the connection for oil country tubular goods, but the connection design varies from company to company. Setting the upper limit to 110 um is experimentally determined. In addition, it is originally important to measure the film thickness at the root portion of the box connection and the crest portion of the pin connection. However, since it is non-destructive and difficult to measure before make-up/break-out, it is preferable to use a numerical value of the film thickness evaluated using a value measured by an electromagnetic film thickness meter at the crest portion of the thread for both threads. This is because the film thicknesses of crests (threads) and roots are often the same. Cross-sectional speculums are accurate, but a film to be used for the make-up/break-out test cannot be trimmed before the test. In addition, since the solid lubricating coating film and the coating film are made up and broke out by applying a strong torque, the solid lubricating coating film and the coating film are crushed or scraped after the completion of the test, such that the solid lubricating coating film and the coating film do not exhibit a normal film thickness. The preferred film thickness range is specified by the film thickness of the crest portions.

In addition, the reason that the surface layer film does not need to be included in the film thickness specification is that the surface layer film supports high lubrication by the solid lubricating coating film as described above, and only functions to shift to the stable position. This is because lubrication implemented by a compound containing a fatty acid and a metal element is actually slippery, and is reconfigured on the connection surface when scraped, and thus local clogging in the gap between the threads and galling hardly occur.


(Others)

The present disclosure can also have the following configurations.


(1) An agent for forming a solid lubricating coating film in a thread portion of oil country tubular goods, in which a solid lubricant is dispersed in a binder resin, 90 wt% or more of the binder resin is a polyamideimide resin, an average molecular weight of the polyamideimide is 20,000 or more and 40,000 or less, 80 wt% or more of the solid lubricant is polytetrafluoroethylene (PTFE), and an average molecular weight of the PTFE is 30,000 or less.

(2) Oil country tubular goods in which a lubricating coating film including a solid lubricating coating film is formed in a thread portion, in which the solid lubricating coating film is formed by dispersing a solid lubricant in a binder resin, 90 wt% or more of the binder resin is a polyamideimide resin (PAI), an average molecular weight of the PAI is 20,000 or more and 40,000 or less, 80 wt% or more of the solid lubricant is polytetrafluoroethylene (PTFE), and an average molecular weight of the PTFE is 30,000 or less.

(3) The PTFE contained in the solid lubricant is 20 wt% or more and 50 wt% or less of the total weight of the solid lubricating coating film.

(4) A hardness of the solid lubricating coating film is F or higher and 4H or lower in terms of pencil hardness.

(5) The lubricating coating film includes a base film formed between a tightening surface of the thread portion and the solid lubricating coating film, and the base film includes a phosphate-treated film or an electroplated film having a Vickers hardness of 200 HV or higher.

(6) The lubricating coating film includes a surface layer formed on the solid lubricating coating film, the surface layer contains a solid lubricant and a binder resin, the solid lubricant in the surface layer is one or a combination of two or more kinds of compounds containing fatty acids of the following X group and metal elements of the following Y group, and the binder resin in the surface layer is a fluorine-based organic compound,

· X group: stearic acid, isostearic acid, behenic acid, lauric acid, and 12-hydroxystearic acid
· Y group: Li, Na, Mg, Al, Ca, Zn, and Ba.


(7) A melting point of the surface layer is 70°C or higher.

(8) A threaded joint for oil country tubular goods in which a box having a female thread and a pin having a male thread are connected, in which one component of the box and the pin includes the oil country tubular goods including the lubricating coating film of the present disclosure, a coating film is not formed on a tightening surface of a thread

24

portion of the other component of the box and the pin, or a coating film having at least one property of corrosion resistance and corrosion protection is formed on the tightening surface of the thread portion of the other component of the box and the pin.

(9) A threaded joint for oil country tubular goods in which a box having a female thread and a pin having a male thread are connected, in which the lubricating coating films of the present disclosure are formed in thread portions of both components of the box and the pin.

(10) A thickness of each of the solid lubricating coating films formed on both the box and the pin at a crest position of the thread portion is 5 um or more and 95 um or less, and the following Expression (1) is satisfied, in which A1 (um) is a thickness of the solid lubricating coating film formed in the thread portion of the box at the crest position (thread portion), and A2 ($\mu$m) is a thickness of the solid lubricating coating film formed in the thread portion of the pin at the crest position.

The film thickness is a film thickness before make-up.

$$A1 + A2 \leq 110 \text{ } \mu m \cdots (1)$$

(11) A thickness of the solid lubricating coating film formed in the thread portion of the oil country tubular goods including the lubricating coating film of the present disclosure at a crest position of the thread portion (thread portion) is 5 um or more and 95 um or less, and A + B $\leq$ 110 $\mu$m, in which A um is a thickness of the lubricating coating film formed in the thread portion of the oil country tubular goods including the solid lubricating coating film of the present disclosure at the crest position, and B um is a film thickness of a rust prevention and lubrication paint formed in the thread portion of the oil country tubular goods on an opposite material facing the oil country tubular goods.

The film thickness is a film thickness before make-up.

Examples

Next, examples will be described based on the present embodiments.

The present examples are examples that mainly evaluate whether or not a lubricating film including the solid lubricating coating film 3 provided on the tightening surface 10 of the threaded joint for oil country tubular goods are acceptable. In the present examples, a make-up/break-out test was performed under the conditions shown in Tables 1 to 8 to determine whether or not a lubricating coating film was acceptable. In the tables, the Dry film refers to the solid lubricating coating film 3.

[Table 1]

| No. | Steel type | OD (inch) | WT (LPF) | Connection type | Dry film conditions | | | | | | | | CPLG | | | | PIN | | | |
|---|---|---|---|---|---|---|---|---|---|---|---|---|---|---|---|---|---|---|---|---|
| | | | | | Binder resin | | | Solid lubricant | | | Weight of PTFE/ total weight of Dry film | Pencil hardness of Dry film | Base film | HV hardness of base film | Dry film | Others | Base film | HV hardness of base film | Dry film | Other PIN films (paints) |
| | | | | | PAI wt%/ total weight of binder resin component | Average molecular weight of PAI | Information of other components contained and mixed | PTFE wt%/ total weight of solid lubricating coating film component | Average molecular weight of PTFE | Information of other components contained and mixed | | | | | | | | | | |
| 1 | Q125 | 9-5/8" | 53.5# | JFELION™ | 100% | 12,000 | – | 100% | 45,000 | – | 48 | F | Mn phosphate | 440 | Only CPLG | – | As-machined | None | None | P1 type |
| 2 | Q125 | 9-5/8" | 53.5# | JFELION™ | 100% | 12,000 | – | 100% | 45,000 | – | 48 | F | Mn phosphate | 440 | Only CPLG | – | As-machined | None | None | P1 type |
| 3 | Q125 | 9-5/8" | 53.5# | JFELION™ | 100% | 12,000 | – | 100% | 45,000 | – | 48 | F | Mn phosphate | 440 | Only CPLG | – | As-machined | None | None | P1 type |
| 4 | Q125 | 9-5/8" | 53.5# | JFELION™ | 100% | 40,000 | – | 100% | 18,000 | – | 40 | 3H | Mn phosphate | 450 | Only CPLG | – | As-machined | None | None | P1 type |
| 5 | Q125 | 9-5/8" | 53.5# | JFELION™ | 100% | 41,000 | – | 100% | 20,000 | – | 20 | 5H | Mn phosphate | 430 | Only CPLG | – | As-machined | None | None | P1 type |
| 6 | Q125 | 9-5/8" | 53.5# | JFELION™ | 100% | 28,000 | – | 100% | 11,000 | – | 35 | 2H | Mn phosphate | 400 | Only CPLG | – | As-machined | None | None | P1 type |
| 7 | Q125 | 9-5/8" | 53.5# | JFELION™ | / | / | / | / | / | / | / | / | Mn phosphate | 490 | / | Applying BOL-72733 | As-machined | | / | Applying BOL-72733 |
| 8 | Q125 | 9-5/8" | 53.5# | JFELION™ | / | / | / | / | / | / | / | / | Mn phosphate | 490 | / | Applying BOL-72733 | As-machined | | / | Applying BOL-72733 |
| 9 | Q125 | 9-5/8" | 53.5# | JFELION™ | 100% | 38,000 | – | 100% | 18,000 | – | 50 | B | Mn phosphate | 430 | Only CPLG | – | As-machined | None | None | P1 type |
| 10 | Q125 | 9-5/8" | 53.5# | JFELION™ | 100% | 28,000 | – | 100% | 7,000 | – | 65 | 2B | Mn phosphate | 420 | Only CPLG | – | As-machined | None | None | P1 type |
| 11 | Q125 | 9-5/8" | 53.5# | JFELION™ | 100% | 22,000 | – | 100% | 14,000 | – | 40 | 2H | Mn phosphate | 450 | Only CPLG | – | As-shotblasted | None | None | P1 type |
| 12 | Q125 | 9-5/8" | 53.5# | JFELION™ | 100% | 22,000 | – | 100% | 14,000 | – | 40 | 2H | Mn phosphate | 410 | Only CPLG | – | As-shotblasted | None | None | None |
| 13 | Q125 | 9-5/8" | 53.5# | JFELION™ | 100% | 29,000 | – | 95% | 9,000 | 5%PFA | 35 | 3H | Mn phosphate | 430 | Only CPLG | – | As-shotblasted | None | None | P1 type |
| 14 | Q125 | 9-5/8" | 53.5# | JFELION™ | 99% | 29,000 | *Using component with purity of 90% (mixing of impurities such as solvent residue, HCl and acetic acid) | 100% | 9,000 | – | 35 | 3H | Mn phosphate | 410 | Only CPLG | – | As-shotblasted | None | None | P1 type |
| 15 | Q125 | 9-5/8" | 53.5# | JFELION™ | 100% | 27,000 | – | 80% | 9,000 | 10%FEP 5%MCA 5%BN | 25 | 2H | Mn phosphate | 400 | Only CPLG | – | As-machined | None | None | P1 type |
| 16 | Q125 | 9-5/8" | 53.5# | JFELION™ | 100% | 26,000 | – | 100% | 9,500 | – | 30 | 4H | As-shotblasted | As-shotblasted | Only CPLG | – | As-shotblasted | None | None | P1 type |

[Table 2]

| No. | Chemical of surface layer | | | | | | | Make/Break test method | Number of times of M/B | Acceptance | Reference |
|---|---|---|---|---|---|---|---|---|---|---|---|
| | Film component of surface layer | Surface on which film is formed | Melting point of solid lubricant (°C) | Proportion of weight of metal elements in solid lubricant (%) | Solvent component not present on surface | Ratio of content weight of solid resin/weight of binder resin-containing component | Amount applied (mg/cm2) | | | | |
| 1 | | | | | | | | 1,000kg of vertical weight tongs using about 1-m short PIN | 2times | Unacceptable | Comparative Example |
| 2 | | | | | | | | Horizontal tongs (load is not applied to thread, no biased load) | ≧5times | Acceptable (excellent) | Comparative Example |
| 3 | | | | | | | | About 1-m short PIN + vertical tongs (PIN: load of 1m is applied) | ≧5times | Acceptable (excellent) | Comparative Example |
| 4 | | | | | | | | About 1-m short PIN + 1,000kg of vertical weight tongs | 3times | Acceptable | Inventive Example |
| 5 | | | | | | | | About 1-m short PIN + 500kg of vertical weight tongs | 2times | Unacceptable | Comparative Example |
| 6 | | | | | | | | 1,000kg of vertical weight tongs using about 1-m short PIN | ≧5times | Acceptable (excellent) | Inventive Example |
| 7 | | | | | | | | 1,000kg of vertical weight tongs using about 1-m short PIN | ≧5times 4times | Acceptable | Comparative Example |
| 8 | | | | | | | | Test using actual length PIN corresponding to actual well (one 8m class) | ≧5times | Acceptable (excellent) | Comparative Example |
| 9 | | | | | | | | 1,000kg of vertical weight tongs using about 1-m short PIN | 3times | Acceptable | Inventive Example |
| 10 | | | | | | | | 1,000kg of vertical weight tongs using about 1-m short PIN | 3times | Acceptable | Inventive Example |
| 11 | | | | | | | | 3,000kg of vertical weight tongs using about 1-m short PIN | ≧5times | Acceptable (excellent) | Inventive Example |
| 12 | | | | | | | | 3,000kg of vertical weight tongs using about 1-m short PIN | 3times | Acceptable | Inventive Example |
| 13 | | | | | | | | 3,000kg of vertical weight tongs using about 1-m short PIN | ≧5times | Acceptable (excellent) | Inventive Example |
| 14 | | | | | | | | 3,000kg of vertical weight tongs using about 1-m short PIN | ≧5times | Acceptable (excellent) | Inventive Example |
| 15 | | | | | | | | 1,000kg of vertical weight tongs using about 1-m short PIN | 4times | Acceptable | Inventive Example |
| 16 | | | | | | | | 1,000kg of vertical weight tongs using about 1-m short PIN | 3times | Acceptable | Inventive Example |

[Table 3]

| No. | Steel type | OD (inch) | WT (LPF) | Connection type | Dry film conditions | | | | | | Weight of PTFE/ total weight of Dry film | Pencil hardness of Dry film | CPLG | | | | PIN | | | |
| | | | | | Binder resin | | | Solid lubricant | | | | | | | | | | | | |
| | | | | | PAI wt%/ total weight of binder resin component | Average molecular weight of PAI | Information of other components contained and mixed | PTFE wt%/ total weight of solid lubricating coating film component | Average molecular weight of PTFE | Information of other components contained and mixed | | | Base film | HV hardness of base film | Dry film | Others | Base film | HV hardness of base film | Dry film | Other PIN films (paints) |
| 17 | Q125 | 9-5/8″ | 47# | JFELION TM | 100% | 24,000 | – | 100% | 11,000 | – | 35 | 3H | Mn phosphate | 430 | Only CPLG | – | As-shotblasted | None | P2 type |
| 18 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 19 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | None |
| 20 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 21 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 22 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 23 | Q125 | 9-5/8″ | 47# | JFELION TM | 100% | 24,000 | – | 100% | 11,000 | – | 35 | 3H | Cu-Sn plating | 570 | Only CPLG | – | As-shotblasted | None | P2 type |
| 24 | Q125 | 9-5/8″ | 47# | JFELION TM | 100% | 24,000 | – | 100% | 11,000 | – | 35 | 3H | Cu-Sn plating | 570 | Only CPLG | – | As-shotblasted | None | None |
| 25 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 26 | Q125 | 9-5/8″ | 47# | JFELION TM | 100% | 24,000 | – | 100% | 11,000 | – | 35 | 3H | Mn phosphate | 435 | Only CPLG | – | As-shotblasted | None | P2 type |
| 27 | Q125 | 9-5/8″ | 47# | JFELION TM | 100% | 24,000 | – | 100% | 11,000 | – | 40 | 2H | Mn phosphate | 420 | Only CPLG | – | As-shotblasted | None | P2 type |
| 28 | Q125 | 9-5/8″ | 47# | JFELION TM | 100% | 27,000 | – | 100% | 9,000 | – | 40 | 2H | Mn phosphate | 545 | Only CPLG | – | As-shotblasted | None | P2 type |
| 29 | Q125 | 9-5/8″ | 47# | JFELION TM | 100% | 27,000 | – | 100% | 9,000 | – | 40 | 2H | Mn phosphate | 410 | Only CPLG | – | As-shotblasted | None | P2 type |
| 30 | Q125 | 9-5/8″ | 47# | JFELION TM | 100% | 27,000 | – | 100% | 9,000 | – | 40 | 2H | Mn phosphate | 430 | Only CPLG | – | As-shotblasted | None | P2 type |
| 31 | Q125 | 9-5/8″ | 47# | JFELION TM | 100% | 27,000 | – | 100% | 9,000 | – | 40 | 2H | Mn phosphate | 425 | Only CPLG | – | As-shotblasted | None | P2 type |
| 32 | Q125 | 9-5/8″ | 47# | JFELION TM | 100% | 27,000 | – | 100% | 9,000 | – | 40 | 2H | Mn phosphate | 420 | Only CPLG | – | As-shotblasted | None | P2 type |
| 33 | Q125 | 9-5/8″ | 47# | JFELION TM | 100% | 27,000 | – | 100% | 9,000 | – | 40 | 2H | Mn phosphate | 415 | Only CPLG | – | As-shotblasted | None | P2 type |
| 34 | Q125 | 9-5/8″ | 47# | JFELION TM | 100% | 27,000 | – | 100% | 9,000 | – | 40 | 2H | Mn phosphate | 420 | Only CPLG | – | As-shotblasted | None | P2 type |
| 35 | Q125 | 9-5/8″ | 47# | JFELION TM | 100% | 29,000 | – | 100% | 10,000 | – | 35 | 3H | Mn phosphate | 420 | Only CPLG | – | As-shotblasted | None | None |
| 36 | Q125 | 9-5/8″ | 47# | JFELION TM | 100% | 29,000 | – | 100% | 10,000 | – | 35 | 3H | Mn phosphate | 430 | Only CPLG | – | As-shotblasted | None | P2 type |

[Table 4]

| No. | Chemical of surface layer | | | | | | | Make/Break test method | Number of times of M/B | Acceptance | Reference |
|---|---|---|---|---|---|---|---|---|---|---|---|
| | Film component of surface layer | Surface on which film is formed | Melting point of solid lubricant (°C) | Proportion of weight of metal elements in solid lubricant (%) | Solvent component not present on surface | Ratio of content weight of solid resin/weight of binder resin-containing component | Amount applied (mg/cm2) | | | | |
| 17 | | | | | | | | 3,000kg of vertical weight tongs using about 1-m short PIN | 3times | Acceptable | Inventive Example |
| 18 | Na stearate | Formed on Dry film on CPLG side | ≧220C | 8% | HFE hydrofluoroether | 3.0 | 0.05 | 3,000kg of vertical weight tongs using about 1-m short PIN | 5times | Acceptable (excellent) | Inventive Example |
| 19 | Na stearate | Formed on Dry film on CPLG side | ≧220C | 8% | HFE hydrofluoroether | 3.0 | 0.05 | 3,000kg of vertical weight tongs using about 1-m short PIN | 5times | Acceptable (excellent) | Inventive Example |
| 20 | Na stearate | Formed on Dry film on CPLG side | ≧220C | 8% | HFE hydrofluoroether | 3.0 | <0.005 | 3,000kg of vertical weight tongs using about 1-m short PIN | 3times | Acceptable | Inventive Example (no improvement) |
| 21 | Na stearate | Formed on Dry film on CPLG side | ≧220C | 8% | HFE hydrofluoroether | 3.0 | 0.01 | 3,000kg of vertical weight tongs using about 1-m short PIN | 7times | Acceptable (excellent) | Inventive Example |
| 22 | Na stearate | Formed on Dry film on CPLG side | ≧220C | 8% | HFE hydrofluoroether | 10.0 | 0.3 | 3,000kg of vertical weight tongs using about 1-m short PIN | 8times | Acceptable (excellent) | Inventive Example |
| 23 | Na stearate | Formed on Dry film on CPLG side | ≧220C | 8% | HFE hydrofluoroether | 10.0 | 0.3 | 3,000kg of vertical weight tongs using about 1-m short PIN | ≧10times | Acceptable (excellent) | Inventive Example |
| 24 | Na stearate | Formed on Dry film on CPLG side | ≧220C | 8% | HFE hydrofluoroether | 10.0 | 0.3 | 3,000kg of vertical weight tongs using about 1-m short PIN | ≧10times | Acceptable (excellent) | Inventive Example |
| 25 | Na stearate | Formed on Dry film on CPLG side | ≧220C | 8% | HFE hydrofluoroether | 0.1 | 0.6 | 3,000kg of vertical weight tongs using about 1-m short PIN | 7times | Acceptable (excellent) | Inventive Example |
| 26 | Na stearate | Formed on Dry film on CPLG side | ≧220C | 8% | HFE hydrofluoroether | 0.05 | 0.005 | 3,000kg of vertical weight tongs using about 1-m short PIN | 3times | Acceptable | Inventive Example (no improvement) |
| 27 | Na stearate | Formed on Dry film on CPLG side | ≧220C | 8% | HFE hydrofluoroether | 15.0 | 2.0 | 3,000kg of vertical weight tongs using about 1-m short PIN | 2times 3times 3times | Acceptable or unacceptable | Comparative Example |
| 28 | | | | | | | | 1,000kg of vertical weight tongs using about 1-m short PIN | 4times | Acceptable | Inventive Example |
| 29 | | | | | | | | Test using actual length PIN corresponding to actual well | ≧5times | Acceptable (excellent) | Inventive Example |
| 30 | Zn/Ca stearate | Formed on Dry film on CPLG side | 125C | 19% | HFE hydrofluoroether | 2.0 | 0.1 | 1,000kg of vertical weight tongs using about 1-m short PIN | 5times | Acceptable (excellent) | Inventive Example |
| 31 | Potassium 12-hydroxy stearate | Formed on Dry film on CPLG side | 150C | 6% | HFE hydrofluoroether | 1.5 | 0.1 | 1,000kg of vertical weight tongs using about 1-m short PIN | 5times | Acceptable (excellent) | Inventive Example |
| 32 | Zn stearate | Formed on Dry film on CPLG side | 120C | 8% | HFE hydrofluoroether | 1.0 | 0.1 | 1,000kg of vertical weight tongs using about 1-m short PIN | 5times | Acceptable (excellent) | Inventive Example |
| 33 | Na behenate | Formed on Dry film on CPLG side | ≧230C | 8% | HFE hydrofluoroether | 2.0 | 0.1 | 1,000kg of vertical weight tongs using about 1-m short PIN | 7times | Acceptable (excellent) | Inventive Example |
| 34 | Na behenate | Formed on Dry film on CPLG side | ≧230C | 8% | HFE hydrofluoroether | 5.0 | 0.3 | 1,000kg of vertical weight tongs using about 1-m short PIN | 9times | Acceptable (excellent) | Inventive Example |
| 35 | Li laurate | Formed on Dry film on CPLG side | ≧230C | 2.4% | HFO hydrofluoroolefin | 3.0 | 0.1 | 1,000kg of vertical weight tongs using about 1-m short PIN | 6times | Acceptable (excellent) | Inventive Example |
| 36 | Al stearate | Formed on Dry film on CPLG side | 160C | 8% | HFO hydrofluoroolefin | 0.8 | 0.1 | 1,000kg of vertical weight tongs using about 1-m short PIN | 5times | Acceptable (excellent) | Inventive Example |

[Table 5]

| No. | Steel type | OD (inch) | WT (LPF) | Connection type | Dry film conditions |  |  |  |  |  |  | Pencil hardness of Dry film | CPLG |  |  |  | PIN |  |  |  |
|---|---|---|---|---|---|---|---|---|---|---|---|---|---|---|---|---|---|---|---|---|
|  |  |  |  |  | Binder resin |  |  | Solid lubricant |  |  |  |  | Base film | HV hardness of base film | Dry film | Others | Base film | HV hardness of base film | Dry film | Other PIN films (paints) |
|  |  |  |  |  | PAI wt%/total weight of binder resin component | Average molecular weight of PAI | Information of other components contained and mixed | PTFE wt%/total weight of solid lubricating film component | Average molecular weight of PTFE | Information of other components contained and mixed | Weight of PTFE/total weight of Dry film |  |  |  |  |  |  |  |  |  |
| 37 | L80 | 7" | 29# | JFEBEAR™ | 100% | 18,000 | - | 100% | 11,000 | - | 28 | B | Mn phosphate | 410 | Only CPLG | - | As-machined | None | P1 type |
| 38 | L80 | 7" | 29# | JFEBEAR™ | 100% | 22,000 | - | 100% | 40,000 | - | 55 | F | Mn phosphate | 420 | Only CPLG | - | As-machined | None | P1 type |
| 39 | L80 | 7" | 29# | JFEBEAR™ | 100% | 22,000 | - | 100% | 37,000 | - | 40 | H | Mn phosphate | 450 | Only CPLG | - | As-machined | None | P1 type |
| 40 | T95 | 7" | 38# | JFELION™ | 100% | 31,000 | - | 100% | 8,500 | - | 18 | 5H | Mn phosphate | 430 | Only CPLG | - | As-machined | None | P1 type |
| 41 | T95 | 7" | 38# | JFELION™ | 100% | 31,000 | - | 100% | 8,500 | - | 18 | 5H | Mn phosphate | 435 | Only CPLG | - | As-machined | None | P1 type |
| 42 | T95 | 7" | 38# | JFELION™ | 100% | 31,000 | - | 100% | 8,000 | - | 53 | F | Mn phosphate | 410 | Only CPLG | - | As-machined | None | P1 type |
| 43 | T95 | 7" | 38# | JFELION™ | 100% | 31,000 | - | 100% | 9,000 | - | 33 | 3H | Mn phosphate | 390 | Only CPLG | - | As-machined | None | P1 type |
| 44 | T95 | 7" | 38# | JFELION™ | 100% | 31,000 | - | 100% | 9,000 | - | 33 | 3H | Mn phosphate | 400 | Only CPLG | - | As-machined | None | P1 type |
| 45 | P110 | 7" | 38# | JFELION™ | 100% | 28,000 | - | 100% | 13,000 | - | 40 | 3H | As-shotblasted | As-shotblasted | Only CPLG | - | As-shotblasted | None | P2 type |
| 46 | P110 | 7" | 38# | JFELION™ | 100% | 28,000 | - | 100% | 13,000 | - | 40 | 3H | As-shotblasted | As-shotblasted | Only CPLG | - | As-shotblasted | None | P2 type |
| 47 | P110 | 7" | 38# | JFELION™ | 100% | 28,000 | - | 100% | 13,000 | - | 40 | 3H | As-shotblasted | As-shotblasted | None | P2 type | Mn phosphate | 410 | Only PIN | - |
| 48 | P110 | 7" | 38# | JFELION™ | 100% | 28,000 | - | 100% | 13,000 | - | 40 | 3H | Mn phosphate | 450 | CPLG and PIN | - | Mn phosphate | 420 | CPLG and PIN | - |
| 49 | P110 | 7" | 38# | JFELION™ | 100% | 28,000 | - | 100% | 13,000 | - | 30 | 4H | As-shotblasted | As-shotblasted | Only CPLG | - | As-shotblasted | None | P2 type |

[Table 6]

| No. | Chemical of surface layer | | | | | | | Make/Break test method | Number of times of M/B | Acceptance | Reference |
|---|---|---|---|---|---|---|---|---|---|---|---|
| | Film component of surface layer | Surface on which film is formed | Melting point of solid lubricant (°C) | Proportion of weight of metal elements in solid lubricant (%) | Solvent component not present on surface | Ratio of content weight of solid resin/weight of binder resin-containing component | Amount applied (mg/cm²) | | | | |
| 37 | | | | | | | | 1,000kg of vertical weight tongs using about 1-m short PIN | Once | Unacceptable | Comparative Example |
| 38 | | | | | | | | 1,000kg of vertical weight tongs using about 1-m short PIN | 2 times | Unacceptable | Comparative Example |
| 39 | | | | | | | | 1,000kg of vertical weight tongs using about 1-m short PIN | 2 times | Unacceptable | Comparative Example |
| 40 | | | | | | | | 1,000kg of vertical weight tongs using about 1-m short PIN | 3 times | Acceptable | Inventive Example |
| 41 | Na stearate | | ≧220C | 8% | HFE hydrofluoroether | 15.0 | 2.0 | 1,000kg of vertical weight tongs using about 1-m short PIN | 5 times | Acceptable (excellent) | Inventive Example |
| 42 | | | | | | | | 1,000kg of vertical weight tongs using about 1-m short PIN | 4 times | Acceptable | Inventive Example |
| 43 | | | | | | | | 1,000kg of vertical weight tongs using about 1-m short PIN | 8 times | Acceptable (excellent) | Inventive Example |
| 44 | | | | | | | | Test using actual length PIN corresponding to actual well | ≧10 times | Acceptable (excellent) | Comparative Example |
| 45 | | | | | | | | 1,000kg of vertical weight tongs using about 1-m short PIN | 8 times 9 times | Acceptable (excellent) | Inventive Example |
| 46 | | | | | | | | Test using actual length PIN corresponding to actual well | 12 times | Acceptable (excellent) | Comparative Example |
| 47 | | | | | | | | 1,000kg of vertical weight tongs using about 1-m short PIN | 7 times | Acceptable (excellent) | Inventive Example |
| 48 | | | | | | | | 1,000kg of vertical weight tongs using about 1-m short PIN | 5 times | Acceptable (excellent) | Inventive Example |
| 49 | | | | | | | | 1,000kg of vertical weight tongs using about 1-m short PIN | 3 times | Acceptable | Inventive Example |

[Table 7]

| No. | Steel type | OD (inch) | WT (LPF) | Connection type | Dry film conditions |  |  |  |  |  | Weight of PTFE/ total weight of Dry film | Pencil hardness of Dry film | CPLG |  |  |  | PIN |  |  |  |
|---|---|---|---|---|---|---|---|---|---|---|---|---|---|---|---|---|---|---|---|---|
|  |  |  |  |  | Binder resin |  |  | Solid lubricant |  |  |  |  | Base film | HV hardness of base film | Dry film | Others | Base film | HV hardness of base film | Dry film | Other PIN films (paints) |
|  |  |  |  |  | PAI wt% / total weight of binder resin component | Average molecular weight of PAI | Information of other components contained and mixed | PTFE wt%/ total weight of solid lubricating coating film component | Average molecular weight of PTFE | Information of other components contained and mixed |  |  |  |  |  |  |  |  |  |  |
| 50 | HP2-13CR-110 (13CR-5Ni-2Mn) | 5.5″ | 23# | JFELION ™ | 100% | 32,000 | – | 100% | 7,500 |  | 45 | H | Cu plating | 125 | Only CPLG | – | As-shotblasted | None | – |
| 51 | HP2-13CR-110 (13CR-5Ni-2Mn) | 5.5″ | 23# | JFELION ™ | 100% | 22,000 | – | 100% | 9,500 |  | 35 | 3H | Cu-Sn plating | 560 | Only CPLG | – | As-shotblasted | None | – |
| 52 | HP2-13CR-110 (13CR-5Ni-2Mn) | 5.5″ | 23# | JFELION ™ | 100% | 26,000 | – | 90% | 11,000 | 3% graphite 7% BN | 30 | 4H | Cu-Sn plating | 535 | Only CPLG | – | As-shotblasted | None | – |
| 53 | HP2-13CR-110 (13CR-5Ni-2Mn) | 5.5″ | 23# | JFELION ™ |  |  |  |  |  |  |  |  | Cu plating | 110 |  | Applying BOL-72733 | As-shotblasted |  |  | Applying BOL-72733 |
| 54 | HP2-13CR-110 (13CR-5Ni-2Mn) | 5.5″ | 23# | JFELION ™ |  |  |  |  |  |  |  |  | Cu-Sn plating | 545 |  | Applying BOL-72733 | As-shotblasted |  |  | Applying BOL-72733 |
| 55 | HP2-13CR-110 (13CR-5Ni-2Mn) | 5.5″ | 23# | JFELION ™ |  |  |  |  |  |  |  |  | Cu plating | 110 |  | Applying BOL-72733 | As-shotblasted | None |  | Applying BOL-72733 |
| 56 | HP2-13CR-110 (13CR-5Ni-2Mn) | 5.5″ | 23# | JFELION ™ |  |  |  |  |  |  |  |  | Cu-Sn plating | 545 |  | Applying BOL-72733 | As-shotblasted | None |  | Applying BOL-72733 |
| 57 | HP2-13CR-110 (13CR-5Ni-2Mn) | 5.5″ | 23# | JFELION ™ | 100% | 26,000 | – | 100% | 9,500 | – | 30 | 4H | Cu-Zn plating | 250 | Only CPLG | – | As-shotblasted | None | P2 type |
| 58 | HP2-13CR-110 (13CR-5Ni-2Mn) | 5.5″ | 23# | JFELION ™ | 100% | 26,000 | – | 100% | 9,500 | – | 30 | 4H | Cu-Zn plating | 220 | Only CPLG | – | As-shotblasted | None | P2 type |
| 59 | HP2-13CR-110 (13CR-5Ni-2Mn) | 5.5″ | 23# | JFELION ™ |  |  |  |  |  |  |  |  | Cu-Sn plating | 270 |  | Applying BOL-72733 | As-machined |  |  | Applying BOL-72733 |
| 60 | P110 | 3.5″ | 9.2# | JFELION ™ | 100% | 38,000 | – | 75% | 15,000 | 25% graphite | 22 | F | Mn phosphate | 535 | Only CPLG | – | As-machined | None | P2 type |
| 61 | P110 | 3.5″ | 9.2# | JFELION ™ | 85% | 38,000 | Mixing of 15 wt% of carbon fiber | 100% | 12,000 | – | 15 | 3H | Mn phosphate | 535 | Only CPLG | – | As-machined | None | P2 type |
| 62 | P110 | 3.5″ | 9.2# | JFELION ™ | 90% | 22,000 | Mixing of 10 wt% of carbon fiber | 100% | 9,000 | – | 20 | ≥5H | Mn phosphate | 535 | Only CPLG | – | As-machined | None | P2 type |
| 63 | P110 | 3.5″ | 9.2# | JFELION ™ | 100% | 27,000 | – | 100% | 8,000 | – | 40 | 3H | As-shotblasted | None | – |  | Mn phosphate | 575 | Only PIN | P2 type |
| 64 | UHP-15CR-125 (15Cr-6Ni-3Mo) | 3.5″ | 9.2# | JFEBEAR™ | 100% | 25,000 | – | 100% | 10,000 |  | 30 | 4H | Cu-Sn plating | 535 | Only CPLG | – | As-shotblasted | None | – |
| 65 | UHP-15CR-125 (15Cr-6Ni-3Mo) | 3.5″ | 9.2# | JFEBEAR™ | 100% | 41,000 | – | 100% | 32,000 |  | 35 | 3H | Cu-Sn plating | 560 | Only CPLG | – | As-machined | None | – |

32

[Table 8]

| No. | Chemical of surface layer | | | | | | Amount applied (mg/cm2) | Make/Break test method | Number of times of M/B | Acceptance | Reference |
|---|---|---|---|---|---|---|---|---|---|---|---|
| | Film component of surface layer | Surface on which film is formed | Melting point of solid lubricant (°C) | Proportion of weight of metal elements in solid lubricant (%) | Solvent component not present on surface | Ratio of content weight of solid resin/weight of binder resin-containing component | | | | | |
| 50 | | | | | | | | 1,000 kg of vertical weight tongs using about 1-m short PIN | 3 times | Acceptable | Inventive Example |
| 51 | | | | | | | | 1,000 kg of vertical weight tongs using about 1-m short PIN | ≥10 times | Acceptable (excellent) | Inventive Example |
| 52 | | | | | | | | 1,000 kg of vertical weight tongs using about 1-m short PIN | 9 times | Acceptable | Inventive Example |
| 53 | | | | | | | | 1,000 kg of vertical weight tongs using about 1-m short PIN | 7 times / 7 times | Acceptable (excellent) | Comparative Example |
| 54 | | | | | | | | 1,000 kg of vertical weight tongs using about 1-m short PIN | 8 times / 9 times | Acceptable (excellent) | Comparative Example |
| 55 | | | | | | | | Test using actual length PIN corresponding to actual well | ≥12 times | Acceptable (excellent) | Comparative Example |
| 56 | | | | | | | | Test using actual length PIN corresponding to actual well | ≥12 times | Acceptable (excellent) | Comparative Example |
| 57 | | | | | | | | 1,000 kg of vertical weight tongs using about 1-m short PIN | 7 times | Acceptable | Inventive Example |
| 58 | | | | | | | | Test using actual length PIN corresponding to actual well | ≥12 times | Acceptable (excellent) | Comparative Example |
| 59 | | | | | | | | Test using actual length PIN corresponding to actual well | ≥12 times | Acceptable (excellent) | Comparative Example |
| 60 | | | | | | | | About 1-m short PIN + 500kg of vertical weight tongs | Once | Unacceptable | Comparative Example |
| 61 | | | | | | | | About 1-m short PIN + 500kg of vertical weight tongs | 2 times | Unacceptable | Comparative Example |
| 62 | | | | | | | | About 1-m short PIN + 500kg of vertical weight tongs | 7 times | Acceptable | Inventive Example |
| 63 | | | | | | | | About 1-m short PIN + 500kg of vertical weight tongs | ≥10 times | Acceptable (excellent) | Inventive Example |
| 64 | | | | | | | | About 1-m short PIN + 500kg of vertical weight tongs | ≥10 times | Acceptable (excellent) | Inventive Example |
| 65 | | | | | | | | About 1-m short PIN + 500kg of vertical weight tongs | 5 times | Unacceptable | Comparative Example |

<Test Method>

The weight tong test (new test method) described above was mainly adopted in the make-up/break-out test adopted in each example. The reason is to prove the upper and lower limit specification of the solid lubricating coating film that can withstand make-up in an actual well.

However, No. 2 is an example in which the test was performed by the evaluation method using the short pin 1 and the horizontal tongs according to the related art. In addition, No. 3 is an example in which the test was performed by the method using the short pin 1 and the vertical tongs according to the related art (method not using the weight 11 according to the related art). In these methods according to the related art, the initial set position, which was the make-up start position before making up by the tongs, was set to a position where tightening by hand was completely performed as in the related art.

In addition, Nos. 8, 29, 44, 46, 55, 56, 58, and 59 are examples in which the test was performed using the vertical tongs using an actual size pin corresponding to an actual well. In these examples, the test was performed by lifting one pin 1 by a crane and using a compensator. In these tests, the initial set position, which was the make-up start position before making up by the vertical tongs, was set to a position where tightening by hand was completely performed as in the related art. Hereinafter, this test is also referred to as an actual well test.

In the weight tong test, the test was performed under the condition in which a large load equal to or more than the actual size pin was applied to the female thread 2a of the box 2 by the weight 11 having a weight equal to or more than the weight of the pin adopted in the actual well. In this test, the initial set position, which was the make-up start position before making up with the vertical tongs, was set to a position that was looser than in the related art, and 1/4 of the total number of threads of the pin 1 was set to a position exposed from the box 2.

<Acceptance Determination Criteria>

The acceptance determination of the make-up/break-out test was as follows.

In the case of a casing application material (outer diameter of 7 inches or more), a case where make-up/break-out were performed 3 times or more was determined as "acceptable". Further, a case where the make-up/break-out were performed 5 times or more was determined as "acceptable (excellent)".

In a case of a tubing application size (as is often the case, the outer diameter was less than 7 inches), a case where the make-up/break-out were performed 7 times or more was determined as "acceptable". Further, a case where the make-up/break-out were performed 10 times or more was determined as "acceptable (excellent)". Whether the 7-inch material itself is used for tubing or casing is on a case-by-case basis.

These criteria are slightly different from ISO13679 (2019). In the casing application material, a determination technology is determined in accordance with ISO13679. The casing size is specified to be made up again after performing the make-up/break-out 2 times. Since galling occurred at the time of break-out, a case where the make-up/break-out were performed 3 times was considered acceptable. However, the tubing application material was determined based on the experimental cases shown in the tables instead of ISO13679 specification (making up again after performing the make-up/break-out 9 times was specified). Here, in many cases, the result of the weight tong test is evaluated more strictly than an actual well test using an actual length pin. In addition, it cannot be denied that lubrication with the solid lubricating coating film coating tends to be worse than lubrication of compounds according to the related art. Therefore, determination was made according to such evaluation criteria.

On this background, in the solid lubricating coating film, the lubricating film itself is gradually scraped as the number of times of make-up/break-out is increased. However, in the case of a compound according to the related art, after each make-up/break-out, the compound is washed away and the compound is applied again, which may affect resetting of the lubrication itself.

The 7-inch material can be used for any evaluation. However, the 7-inch material shown in each of Nos. 36 to 48 was an example of thick LPF (Lb/Ft.) 29# and 38#, and thus, it was considered as the casing application material, and a case where the make-up/break-out were performed 3 times or more was determined as "acceptable", and a case where the make-up/break-out were performed 5 times or more was determined as "acceptable (excellent)".

Hereinafter, case groups that experimentally evaluated to explain the claims of the present disclosure are shown in Tables 1 to 8. In the tables, the Dry film means a solid lubricating coating film.

Conditions and the like of examples are shown in Tables 1 to 8. Except for Nos. 48, 49, and 50, in the results of examination, the thicknesses of the solid lubricating coating films formed on the box connection side (coupling) and the pin connection side were 40 to 50 um for the former, and 10 to 40 um for the latter. The reason that it seems that the thickness of the solid lubricating coating film of the latter formed on the pin connection side varies is that the film thickness of the overlapped portion is included without uniformly producing the lubricating film because the solid lubricating coating film is applied with a brush. The solid lubricating coating film is mainly composed of a region having substantially the same thickness at a level of 10 to 25 $\mu$m.

<Evaluation>

"Reason for Using Weight Tong Test"

Nos. 1 to 3 are results of comparing the evaluation results of the weight tong test or the test by the horizontal tongs according to the related art, and the test by the vertical tongs without the weight 11 according to the related art.

No. 1 was determined as unacceptable in the weight tong test using a 1 ton weight 11 because the solid lubricant and the binder resin contained in the solid lubricating coating film 3 deviate from the scope of the present disclosure.

On the other hand, the tests performed using the horizontal tongs in No. 2 and the vertical tongs without the weight 11 in No. 3 were determined as acceptable.

Like the horizontal tongs, the condition in which the load is not applied to the thread (particularly, the female thread 2a side) is a loose condition that deviates from the use condition of the actual well. In addition, even in the vertical tongs without the weight 11, only the load of one short pin (in the case of this size, about 100 kg) is applied, this is a loose condition that deviates from the actual use condition. Therefore, Nos. 1 and 2 are evaluated as acceptable. However, in the actual well, galling occurred as simulated by the result of the weight tong test of No. 1.

From the evaluations of Nos. 1 to 3, it was found that the upper and lower limits of each component of the solid lubricating coating film 3 were not able to be evaluated unless the lubrication of the solid lubricating coating film 3 was evaluated by a make-up test or a weight tong test using the actual well.

"Whether or Not Determination Conditions Are Acceptable"

Nos. 7, 8, and 53 to 56 are examples in which the solid lubricating coating film 3 is not adopted but an API-mod compound is used for lubrication, and are results of comparing the determinations of the actual well test and the weight tong test. Specifically, as lubrication, a Mn phosphate film, a Cu plated film, a Cu-Sn plated film, and the like were formed as the base film 4 on the coupling (female thread 2a), and a BOL-72733 compound manufactured by Best-O-Life Corporation was applied thereto.

Nos. 7 and 8 are examples in which 9-5/8" 53.5# carbon steel (outer diameter: 244.48 mm, thickness: 13.84 mm) is subjected to a Mn phosphate treatment as the base film 4 for the coupling. Nos. 53 to 57 are examples in which a 5-1/2" 23# high alloy (13Cr-5Ni-2Mo: HP2-13Cr-110) (outer diameter: 139.70 mm, thickness: 10.54 mm) is subjected to Cu plating or Cu-Sn plating as the base film 4.

No. 7 is a test result in the weight tong test using a 1 ton weight. No. 8 is a result in an actual well test (pipe of Range-2: one pin at 8 m or more).

From Nos. 7 and 8, it can be seen that the number of times of M/B is slightly higher in the actual well test than in the weight tong test.

In addition, Nos. 53 and 55 are examples using Cu plating as the base film 4. In addition, Nos. 54 and 56 are examples using Cu-Sn plating as the base film 4. Nos. 53 to 56 are results of performing and comparing the weight tong test and the actual well test.

In Nos. 55 and 56, the evaluation was performed by an actual well test, and a make-up/break-out test was performed by any plating 15 times or more exceeding 10 times specified in the ISO13689 standard. On the other hand, in the weight tong test of Nos. 53 and 54, the number of times of make-up/break-out was smaller than the number of times in the actual well test.

Also from this example, it was found that the weight tong test was evaluated under more severe conditions than the actual well test. In addition, it is shown that the conditions under which the weight tongs can be sorted are excellent even when applied to an actual well.

From the results of Nos. 7, 8, and 53 to 56, the following can be seen.

In the case of the large diameter side (in this example, 9-5/8" or more (outer diameter: 244.48 mm or more)), it was found that, in the evaluation of the weight tong test, it was determined as OK when make-up/break-out were performed 3 times or more. In addition, in the case of the small diameter side (in this example, the diameter equal to or smaller than that of a small diameter group including about 5.5" (outer diameter: about 139.70 mm)), it was found that it was determined as OK when the number of times of M/B of 7 or more was confirmed in the evaluation of the weight tong test. At the same time, the number of times of M/B of 5 or more for the large diameter and 10 or more for the small diameter is used as a criterion for determining that there is more excellent lubricity.

In this example, even in an example using an API-mod compound (Best-O-Life Corporation: BOL-72733) according to the related art, the number of times of M/B as described in ISO13679 cannot be realized by the weight tong test. In particular, it is suggested that it cannot be realized with a small diameter.

"Paint for Pin"

The P1 type and P2 type of paint for the pin commonly used in examples will be described. The film formed with the paint for the pin is a "film having corrosion resistance (paint base film)" formed on the tightening surface on the side where the solid order coating film is not formed.

The P1 type is a paint containing only a fluororesin. The P2 type refers to a paint having a structure in which a metal soap is dispersed in the P1 type paint. Each of these paints is applied to realize corrosion resistance of the male thread 1a. In examples, how these paints were effective in lubrication was evaluated.

Nos. 1 to 16 are cases of using a 9-5/8" 53.5# (outer diameter: 244.48 mm, thickness: 13.84 mm) carbon steel-based Q125 material and a connection for oil country tubular goods JFELION™. Nos. 1 to 16 show cases where the surface layer 5 is not provided.

Nos. 1 to 15 are cases where a Mn phosphate chemical conversion-treated film is formed on the coupling as the base film 4. In No. 16, the coupling remains as the shot-blasted skin.

As for the paint of the pin 1, Nos. 7 and 8 are cases where BOL-72733 is applied, and No. 12 is a case where a paint is not applied. In other cases (Nos. 1 to 6, 9 to 11, and 13 to 15), the P1 type is applied as the paint of the pin 1.

First, Nos. 7 and 8 are cases where a test is performed by forming a Mn phosphate coating film on the coupling as the base film 4, and applying a specified amount of API-mod compound BOL-72733 manufactured by Best-O-Life Corporation to the skin in which the pin 1 is threaded. In addition, No. 7 was tested in the weight tong test, and No. 8 was tested in the actual well test. Then, in both Nos. 7 and 8, it was confirmed that the make-up/break-out were performed more times than those of the determination criteria. Every time break-out was performed, the compound formed on the tightening surface was removed with an organic solvent (isopropyl alcohol: IPA), BOL-727733 was re-applied, and make-up/break-out were repeated. On the other hand, in the example of the solid lubricating coating film, the thread surface was cleaned by air blowing each time make-up/break-out were performed, and then, make-up/break-out were repeated.

No. 1 is a comparative example for grasping the level of the state of evaluation in the related art. No. 1 is a comparative example in which the molecular weight of PAI of the binder resin is below the lower limit of the range of the present disclosure, and in which the molecular weight of PTFE of the solid lubricant exceeds the upper limit of the range in the present disclosure. In addition, this is an example in which a weight 11 is subjected to a make-up/break-out test by applying a load of 500 kg, which is lighter than a load of a weight in the weight tong test. No. 1 is a comparative example in which it is determined as unacceptable in only the number of times of M/B of 2.

No. 2 is a case of performing a make-up/break-out test using horizontal tongs under the same conditions of the solid lubricating coating film as those of No. 1 without applying the weight 11. In these examples Nos. 1 and 2, similarly to the following case of the solid lubricating coating film 3, dust (debris derived from the peeled piece of the solid lubricating coating film 3) is removed by air blowing for each set of the make-up/break-out, and the make-up/break-out is repeated. In No. 2 using the horizontal tongs, the number of times of M/B of 5 or more (the test was terminated after 5 times) was achieved, and the evaluation results exceeded the acceptance level, but this is regarded as a comparative example. As emphasized many times, as can be seen from the evaluations of Nos. 1 and 2, in the tests using the horizontal power tongs or the vertical power tongs using a simple short pin 1, it also shows that the selection of the solid lubricating coating film 3 cannot be performed because a large load received in the actual well or a biased load generated at the time of the make-up/break-out cannot be simulated.

The case of No. 3 is the result of testing only the short pin 1 without the weight 11 using the vertical tongs, and in the evaluation of the No. 3, the number of times of M/B of 5 or more (the test was terminated after 5 times) was achieved, and the determination exceeded the acceptance level, but No. 3 is regarded as a comparative example 3.

Since the weight ratio of PTFE and the film hardness are also controlled in the preferred ranges, Nos. 4 and 6 are determined as acceptable and acceptable (excellent), respectively.

Since the molecular weight of PAI of the binder resin exceeds the upper limit of the present disclosure, No. 5 is determined as unacceptable. In addition, No. 5 is an example in which the hardness of the solid lubricating coating film is 5H, which exceeds the upper limit.

Nos. 7 and 8 are comparison results when the weight tong test or the actual well test was performed under the condition in which BOL-72733 was applied onto the base film formed of Mn phosphate instead of the solid lubricating coating film 3. From these comparison results, it was found that the evaluation and selection results obtained by using the weight tongs were evaluated slightly more strictly than in the results obtained by using the actual pin.

Nos. 9 and 10 are cases where the conditions of the constituent elements of the solid lubricating coating film 3 specified in the present disclosure are satisfied, but the other conditions specified in the present disclosure are not satisfied. In Nos. 9 and 10, 3 times of the make-up/break-out is confirmed, which is an acceptance level at a tighten level.

As in No. 6, Nos. 11, 13, and 14 are examples in which the components of the solid lubricating coating film 3 are controlled within the scope of the present disclosure, and at the same time, the weight ratio of PTFE with respect to the entire solid lubricating coating film 3 and the film hardness are also controlled with the preferred ranges specified in the present disclosure. Nos. 11, 13 and 14 are examples determined as "acceptable (excellent)".

No. 12 is performed under the substantially the same conditions as those in No. 11. However, No. 12 is a test result performed in a blasting state without applying the P1 type paint (the film having corrosion resistance) to the pin 1 in which the solid lubricating coating film 3 is not formed. No. 12 shows that the number of times of M/B is decreased as compared with No. 11, but falls within the acceptable range. It is suggested from this that even in a case where a corrosion protective paint is applied to the side on which the solid lubricating coating film 3 is not provided, some lubrication improving effects can be expected.

No. 13 is a case of an inventive example in which PFA is contained in the solid lubricant in an amount of 5% with respect to the main component of PTFE (80 wt% or more). No. 13 is determined as "acceptable (excellent)".

No. 14 is a case where a proportion of PTFE to all the components of the solid lubricant in the constituent elements of the solid lubricant is 80 wt% as the lower limit of 80 wt% of the present disclosure. In addition, No. 14 is an example in which fluorinated ethylene propylene (FEP) (that is, hexafluoropropylene-tetrafluoroethylene copolymer), melamine cyanurate (MCA), and boron nitride (BN) are mixed in the solid lubricating coating film 3 at proportions of 10%, 5%, and 5%, respectively. The present disclosure is a patent that specifies an average molecular weight of the solid lubricant containing PTFE as a main component. However, as can be seen from No. 14, it was found that when the addition (mixing) was 20% or less, the number of times of M/B was preferably maintained. No. 14 is an evaluation case of the weight tong test and is determined as "acceptable (excellent)".

Unlike Nos. 1 to 15, No. 16 is a case where the solid lubricating coating film 3 is formed directly on the tightening surface without providing a Mn phosphate film (base film) on the coupling. In addition, in No. 16, the conditions of the solid lubricating coating film 3 are the conditions specified within a more preferred range. That is, in No. 16, the molecular weight of PAI of the binder resin is within a preferred range of 20,000 to 30,000, and the molecular weight of PTFE of the solid lubricant is within a preferred range. At the same time, the weight ratio of PTFE and the pencil hardness of the solid lubricating coating film 3 are also conditions within preferred ranges. No. 16 is an evaluation case in the weight tong test, and a case where the number of times of M/B is realized 3 times. Even in a case where the specification of the solid lubricating coating film 3 is in a preferred range, when the base film 4 is not provided, the number of times of M/B is also almost the specified lower limit. Therefore, it can be seen that formation of the hard base film 4 having an HV hardness of 200 or more contributes to improvement of lubrication characteristics of the solid lubricating coating film 3. The hardness of the base film will be described again in the examination of Nos. 57 to 59.

The cases of Nos. 17 to 27 mainly show cases where the coating film is formed on the outermost layer of the lubricating film using a 9-5/8" 47# oil country tubular goods (outer diameter: 244.48 mm, thickness: 11.99 mm) formed of a carbon steel-based Q125 material while including comparative examples. However, only in the cases Nos. 23 and 24, the base film 4 formed of Cu-Sn plating is formed, and in other cases (Nos. 17 to 22 and 25 to 27), the base film 4 formed of the Mn phosphate is formed. All Nos. 17 to 27 are evaluation cases in the weight tong test by a weight 11 of a load of 3,000 kg. This simulates a make-up situation in a state where more than three pins 1 are connected.

No. 17 is a comparative example with respect to Nos. 18 to 27, and is a case where the surface layer 5 is not formed. In No. 17, since the load of 3 tons are applied, and the number of times of M/B is 3, but the acceptance determination criteria are satisfied.

In Nos. 17 to 22 and 25 to 27, the Vickers hardness of the Mn phosphate as the base film 4 is at substantially the same hardness level, but the hardness slightly varies. The reason is as follows. The base film 4 has a thickness of 10 um or less as much as possible and looks like a uniform homogeneous film at the naked eye level, but at the micro level, Mn phosphate single crystals are densely formed and deposited. In addition, it is presumed that the base film 4 is affected because the base film 4 is not separated from the solid lubricating coating film 3 as the Vickers indentation is illustrated in FIG. 7. However, the treatment conditions of the base film 4 were the same in all cases.

In all Nos. 17 to 27, in the solid lubricating coating film 3, the molecular weight of PAI of the binder resin is 24,000 and is in a preferred range of 20,000 to 30,000 under the same conditions. In addition, the molecular weight of PTFE of the solid lubricant is 11,000 and is in a preferred range of 15,000 or less.

The weight ratio (%) of PTFE with respect to the total weight of the solid lubricating coating film is 35% in Nos. 11 to 17, and the pencil hardness of the solid lubricating coating film 3 is 3H. In only No. 27, the weight ratio of PTFE was 40%, and the pencil hardness was 2H. When the surface layer 5 was applied thereto, the solid lubricating coating film 3 was applied and then applied as uniformly as possible by hand coating (brush coating). In addition, the binder resin contained in the surface layer 5 in each of Nos. 18 to 27 is obtained by polymerizing an agent containing a plurality of fluorine-containing monomers by drying a solvent component in the atmosphere and removing the dried solvent component.

Nos. 18 to 27 are cases where the surface layer 5 is provided. The results of Nos. 18 to 27 are compared with the case of No. 17 in which the surface layer 5 is not provided to examine the lubrication performance.

Among Nos. 18 to 27, Nos. 18 to 26 are equal to or superior to the case of No. 17 in the number of times of M/B.

On the other hand, No. 27 is an example in which the number of times of M/B is less than 3 and it is determined as unacceptable (comparative example).

Nos. 18, 19, and 21 to 25 are cases where the weight ratio of the component of the solid lubricating coating film to the total weight in the surface layer 5 is controlled in a range of 0.1 times to 10.0 times within a preferred range. Furthermore, Nos. 18, 19, and 21 to 25 are cases where the amount applied is controlled in a preferred range of 0.01 mg/mm$^2$ or more and 1 mg/mm$^2$ or less. In Nos. 18, 19, and 21 to 25 are examples that can be confirmed to be at the level of 5 times or more and can be determined as "acceptable (excellent)", and are examples of the present invention. It was found that the number of times of M/B can be significantly improved by applying the surface layer 5 in an appropriate amount.

Among them, No. 19 is a case of lubrication in a case where a film having corrosion resistance is not formed on the pin 1. From these cases, it was found that in a case where the surface layer 5 was formed on an upper layer of the solid lubricating coating film 3, even when the coating film having corrosion resistance was not formed on the side on which the solid lubricating coating film 3 was not provided, excellent lubrication behavior was exhibited.

In addition, Nos. 23 and 24 are cases where the base film 4 is a Cu-Sn plated film. Similarly to No. 19, No. 24 is also a case where a film having corrosion resistance is not provided on the pin 1. From Nos. 23 and 24, it was found that the effect of forming the Cu-Sn plated film as the hard base film 4 and significantly preferred lubrication characteristics were exhibited when the surface layer 5 was formed on the upper portion of the solid lubricating coating film 3 in a preferred range.

No. 20 is an example in which the amount of the surface layer 5 applied is small, and the number of times of M/B is 3, which is in an acceptable range. No. 20 has no change in 3 times of the comparative case of No. 17, has no improvement, but is regarded as an inventive example. No. 20 is an inventive example, but also means that the number of times of M/B is not improved unless the surface layer 5 is applied in a preferred range.

In addition, in No. 20, there was a possibility that it was slightly microscopically speckled when the surface layer 5 was applied too thinly when being formed. It is presumed that the effect of locally peeling off the solid lubricating coating film 3 more than necessary is small until the coupling and the pin 1 mesh with each other.

No. 26 is a case where the ratio of the weight of the solid lubricant component to the weight of the surface layer 5 deviates from a preferred range to be a lower level, and the amount of the surface layer 5 applied also falls below the lower limit of the preferred range. No. 26 has the number of times of M/B of 3 and is in an acceptable range. However, No. 26 is an example in which there is no improvement at the same level as that of No. 17.

No. 27 is a case where the ratio of the weight of the solid lubricant component to the weight of the surface layer 5 deviates from a preferred range to be a higher level, and the amount of the surface layer 5 applied is also too large. In the case of No. 27, the number of times of M/B is up to 2, and it is determined as unacceptable. The reason that the case of No. 27 is determined as unacceptable is as follows. That is, the amount of the solid lubricant component is too large. In addition, it is presumed that when the amount applied is too lager, galling tends to occur because the gap between the threads is clogged due to the peeled piece from the surface layer 5.

Among the cases of Nos. 17 to 27 described above, in the case of the 9-5/8" 47# carbon steel-based Q125 material (outer diameter: 244.48 mm, thickness: 11.99 mm), the surface layer 5 is evaluated by the weight tong test using a weight 11 having a load of 3,000 kg, and examination is performed using a Na stearate as a solid lubricant.

In a case where the solid lubricating coating film in the specified range of the present disclosure is formed on the coupling connection, whether or not there is the solid lubricating coating film on the pin connection, it is obvious that the lubrication behavior is improved when the surface layer 5 is formed and in the preferred range specified by the present disclosure. In addition, even when it is below the lower limit of the preferred range, the lubrication behavior is not deteriorated, and the same characteristics as those in the state in which the surface layer 5 is not provided are maintained. On the contrary, it is apparent from the examples of Nos. 20, 26, and 27 in which when the amount applied exceeds the preferred range and is large, the lubrication behavior in the acceptable range is mixed with the lubrication behavior in the unacceptable range.

The following Nos. 28 to 36 are cases of comparing the effects of the components of the soap component and the metal soap, which are solid components of the surface layer 5. Nos. 28 to 36 are evaluation cases by the weight tong test mainly using a weight 11 of a load of 1,000 kg. In No. 28, the surface layer 5 is not provided under a reference condition. In No. 28, it was confirmed that the number of times of M/B was 4. Compared to No. 17 (3 tons of weight tongs) having similar solid lubricating coating film conditions, in No. 28, a load is 1 ton (weight corresponding to one pin 1 corresponding to 8 m), which can be interpreted that the number of times is increased due to the light load.

No. 29 is a case performed at the same applied load as the conditions of the weight tong test as a comparative condition. That is, it is a result in an actual well test in a case where one actual size pin is used. In No. 29, it was confirmed that the number of times of M/B is 5 or more.

From the comparison between Nos. 28 and 29, it can be seen that the make-up test using the weight tongs is evaluated slightly more severely than the make-up condition of the actual size pin that is used in the actual well.

Nos. 30 to 36 are examples in which the material properties of the surface layer 5 are examined in comparison with No. 28. From the evaluations of Nos. 30 to 36, it was found that the number of times of M/B was improved when the solid lubricant containing the X group and the Y group was controlled in the preferred range determined by the present disclosure. In comparison between Nos. 30 to 36 and No. 28, the cases of Nos. 33 to 35 in which the melting point of the solid lubricant is high have a further improved effect of increasing the number of times. In addition, No. 35 is a case where a film having corrosion resistance is not provided on the pin 1 as in No. 19 or 24. As in No. 35, it was found that when the surface layer 5 was applied, the degree of contribution of the surface layer 5 to improvement is higher than the influence of the film having corrosion resistance formed on the pin 1.

Cases of Nos. 37 to 49 are examples in which the pipe has an outer diameter of 7 inches. Nos. 37 to 39 are cases where the pipe is a 7"29# carbon steel-based L80 material. Nos. 40 to 44 are cases where the pipe is a 7"38# carbon steel-based T95 material. Nos. 45 to 49 are cases where the pipe is a P110 material. In the cases of Nos. 37 to 49, it was considered that the casing was applied, and in the acceptance determination of the number of times of M/B, it was evaluated as "acceptable" in the case where the number of times of M/B was 3 or more, and was evaluated as "acceptable (excellent)" in the case where the number of times of M/B was 5 or more.

In Nos. 44 and 46, the evaluation was performed by the actual well test using one actual size pin. Except for Nos. 44 and 46 among Nos. 37 to 49, the remaining cases are evaluation examples in the weight tong test using a weight 11 having a load of 1,000 kg. 1,000 kg simulates the weight when two pins of the corresponding size are connected. Nos. 37 to 43 are cases where the specifications of the weight ratio (%) of PTFE to the total weight of the solid lubricating coating film 3 and the pencil hardness of the solid lubricating coating film 3 are evaluated.

No. 47 is a case where only the solid lubricating coating film 3 is formed on the pin 1. No. 48 is a case where the solid lubricating coating film 3 is formed on both the coupling side and the pin 1 side. No. 49 is a case where the Mn phosphate layer as the base film 4 is not provided, and only the solid lubricating coating film 3 is formed on the coupling side.

First, examples of Nos. 37 to 43 will be described. No. 37 is a case where the pencil hardness of the solid lubricating coating film 3 deviates from the lower limit of the preferred range of the present disclosure and becomes too soft. No. 37 is a case where the pencil hardness of the solid lubricating coating film 3 is B and the number of times of M/B was only 1, and it is determined as unacceptable. However, in order to obtain the hardness, the average molecular weight of PAI of the binder resin falls below the lower limit of 20,000 of the preferred range, which may be the main cause to be determined as unacceptable.

No. 38 is an example of a case where the weight (%) of PTFE with respect to the total weight of the solid lubricating coating film 3 is larger than a preferred range. No. 38 is a case where the number of times of M/B is only 2, and it is determined as unacceptable. However, the determination for No. 38 may be related to the fact that the average molecular weight of PTFE exceeds the upper limit of 30,000 of the preferred range. It can also be said that either of the former or the possibilities of containing too much solid lubricant, or both affect.

No. 39 is a case where the pencil hardness of the solid lubricating coating film 3 is within the specified range, and the weight (%) of PTFE with respect to the total weight of the solid lubricating coating film 3 also is within the specified range. However, this case is a case where the average molecular weight of PTFE of the solid lubricant, which is one of the specifications of the solid lubricating coating film, which is the basis of the present disclosure, is larger than the specified upper limit of 30,000. No. 39 is a case where the number of times of M/B is 2 and it is determined as unacceptable.

No. 40 satisfies the specifications of the present embodiment for the solid lubricant and the binder resin. However, No. 40 is a case where the weight ratio (%) of PTFE with respect to the total weight of the solid lubricating coating film 3 is less than the lower limit, and the pencil hardness of the solid lubricating coating film 3 is higher than the upper limit. However, it is a case where the specification of the solid lubricating coating film 3 itself is satisfactory. No. 40 is a case where the solid lubricant in charge of lubrication is prepared in a small amount although the specification of the solid lubricating coating film 3 itself is followed. Therefore, it can be said that the solid lubricating coating film 3 is hardened. No. 40 is a case where it can be confirmed the weight ratio (%) of PTFE is up to 18%, the pencil hardness is up to 5H, and the number of times of M/B is up to 4, which exceeds the reference value of 3. This case is regarded as an inventive example.

No. 41 is a case where the surface layer 5 is formed on upper portion of the solid lubricating coating film 3 as compared to No. 40, but it has an effect of improving lubrication and is determined as "acceptable (excellent)".

No. 42 is a case where the weight ratio (%) of PTFE exceeds the specified value and a large amount of solid lubricant is mixed. No. 42 is a case where the solid lubricating coating film 3 is softened because of it. No. 42 is a case where it can be confirmed the weight ratio (%) of PTFE is up to 53%, and the number of times of M/B is up to 4, which exceeds the reference value of 3. The case is regarded as an inventive example.

On the other hand, No. 43 is a case where the solid lubricating coating film 3 itself is in the specified range, and the weight ratio (%) of PTFE and the pencil hardness of the solid lubricating coating film 3 are also in specified values. No. 43 is an inventive example in which it can be confirmed that the number of times of M/B is up to 8, and it is determined as "acceptable (excellent)".

No. 44 is a result of an actual well test under the same conditions as those in No. 43 and using an actual size pin. In an actual environment, it is suggested that 10 times or more (test termination after 10 times) is possible. At the same time, No. 44 indicates that the weight tong test is slightly more severe.

Nos. 45 and 46 are cases where the specification of the solid lubricating coating film 3 itself satisfies a preferred range, and are results of comparing the test results of the weight tong test and the actual well test. Nos. 45 and 46 are reference evaluation indices of Nos. 45 to 49.

In No. 45, the number of times of M/B obtained using the weight tong test was 8 or 9. On the other hand, No. 46 is an evaluation in an actual well test, and the number of times of M/B is increased to 12. In the case of the pipe size and the solid lubricating coating film condition, it can be seen that the number of times of make-up is increased by 3 or 4 in the actual well test as compared in the weight tong test. At the same time, it can be seen that the weight tong test is evaluated more strictly.

Nos. 47 to 49 are cases where the conditions in which the manner of base treatment is changed are confirmed at 7"38#. No. 47 is a case where the pin 1 is subjected to the Mn phosphate treatment as the base film 4 to form the solid lubricating coating film 3 in a specified range while the coupling is shot blasted as it is. In No. 48, among the conditions of No. 47, the condition in which the coupling was not shot blasted but was subjected to the Mn phosphate treatment as the base film 4 was set.

In both Nos. 48 and 47, the number of times of M/B was 8 or more (the test was terminated after 8 times). These cases are inventive examples, which is determined as "acceptable (excellent)". This case shows that even when the solid lubricating coating film 3 is formed on the pin 1, there is no particular problem in lubrication.

No. 49 is also a case where the solid lubricating coating film 3 is formed on the shot blasting skin on which the base film 4 is not formed, under the same solid lubricating coating film conditions as those of No. 47 or 48. No. 49 is an inventive example in which the number of times of M/B is reduced to 3, but it is determined as acceptable.

The cases of Nos. 50 to 59 are study cases when the solid lubricating coating film 3 is attached to an HP2-13CR-110 material (manufactured by JFE Steel Corporation, Mod-13Cr, generic of Super-13Cr, 13Cr-5Ni-2Mo) with an outer diameter thickness of 5.5"23#, and are cases obtained by mainly studying the type of base film.

Cases of Nos. 60 to 63 are study cases when the solid lubricating coating film 3 is attached to carbon steel:

P110 with an outer diameter thickness of 3.5"9.2# (outer diameter: 88.90 mm, thickness: 6.45 mm). These cases are cases where carbon fibers are incorporated into a solid lubricating coating film. Cases of Nos. 64 and 65 are study cases where the solid lubricating coating film 3 is attached to a UHP™-15CR-125 material (martensitic stainless steel pipe containing 15% of Cr) with an outer diameter thickness of 3.5"9.2#.

Nos. 55, 56, 58 to 60, and 64 are cases of evaluation in an actual well test according to an actual well, or evaluation by weight tongs that applies 1,000 kg of a weight equivalent to a weight obtained by connecting two actual pins.

No. 50 is a case where Cu plating is used for the base film 4 although the specification of the solid lubricating coating film 3 is in the specified range of the present disclosure. In No. 50, the hardness of the Cu plating as the base film 4 is 125 HV, which deviates from the preferred standard of the base film. No. 50 is an inventive example in which the number of times of M/B is only 3, and it is barely determined as an acceptance level. In No. 50, the solid lubricating coating film 3 was completely peeled off from the Cu plated film in the fourth make-up/break-out, and galling occurred.

Nos. 51 and 52 are cases of studying a Cu-Sn-based binary electroplated film as the base film 4. A slight difference between Nos. 51 and 52 is that, in the former, the solid lubricant of the solid lubricating coating film 3 is 100% of PTFE, whereas in the latter, as the solid lubricant, 90% of PTFE, and total of 10% of BN and graphite are mixed. In addition, in Nos. 51 and 52, the weight (%) of PTFE with respect to the total weight of the solid lubricating coating film 3 was specified so that the former was larger and the latter was smaller. As a result, in Nos. 51 and 52, the pencil hardness is 3H in the former and 4H in the latter in conjunction with the above conditions. In addition, in Nos. 51 and 52, the hardness of the Cu-Sn plating as the base film 4 is 560 HV in terms of hardness in the former and 535 HV in terms of softness in the latter. In No. 51, the number of times of M/B is more than 10 (the test is terminated after 10 times). In No. 52, the number of times of M/B is 9. However, these two cases are determined as "acceptable (excellent)" and are inventive examples.

On the other hand, Nos. 53 to 56 are not examples of the solid lubricating coating film 3. In these cases, Cu plating or Cu-Sn plating as the base film 4 is formed on the coupling, and make-up/break-out is performed under the condition in which a BOL-72733 compound is applied to the coupling and the pin 1. In Nos. 53 and 54, a weight tong test using 1,000 kg of a weight 11 (actual length pin: corresponding to a weight of about 2.5 pins) is adopted, and in Nos. 55 and 56, an actual well test using one actual length pin is adopted for evaluation.

In No. 53, Cu plating was used as the base film 4, the conditions of the weight tong test were adopted, and the number of times of M/B was 7 in evaluation 2 times. In No. 54, Cu-Sn plating was used as the base film 4, the conditions of the weight tong test were adopted, and the number of times of M/B was 8 or 9 in evaluation 2 times. In No. 54, Cu plating was used as the base film 4, an actual well test in which an actual size pin was used was adopted, and the number of times of M/B was 12 or more (the test was terminated after 12 times). In No. 55, Cu-Sn plating was used as the base film 4, an actual well test was adopted, and the number of times of M/B was 12 or more (the test was terminated after 12 times). In an actual well test, the number of times of M/B of the tubing size specified in ISO13679 can be clearly 10. However, this criterion cannot be reached because the evaluation is severely performed in the weight tong test. On the other hand, from the results of Nos. 53 and 54, it is considered that when the number of times of M/B is about 7 or more under the condition of the solid lubricating coating film 3 in the corresponding size, it means that the solid lubricating coating film 3 satisfying the specification of ISO13679 can be realized in an actual well. That is, in the case of the solid lubricating coating films 3 of Nos. 51 and 52, it may be estimated that the number of times of M/B of 10 or more is realized in an actual well.

Nos. 57 to 59 are cases where the base film 4 is Cu-Zn plated. Nos. 57 to 59 are cases where the base film 4 is plated with Cu:Zn = 6:4, and HV is 220 to 270. Nos. 57 and 58 are cases where the specification of the solid lubricating coating film itself satisfies the scope of the present disclosure. No. 59 is a case of using BOL-72733 of an API-mod compound instead of the solid lubricating coating film 3. No. 57 is a test result in the weight tong test using 1,000 kg of a weight 11. Nos. 58 and 59 are results in an actual well test using an actual pin (corresponding to Range-2, more than 8 m). The results of Nos. 57 and 58 were, in order, 7 times (acceptable) and ≥ 12 times (acceptable "excellent"). From Nos. 57 and 58, it was found that when the hardness was 200 HV or higher, excellent lubrication was achieved.

Cases of Nos. 60 to 63 are study cases when the solid lubricating coating film 3 is attached to a P110 material with an outer diameter thickness of 3.5"9.2#. Cases of Nos. 60 to 63 are results of mainly studying the type of the base film 4. All Nos. 60 to 63 are evaluation cases where weight-equipped power tongs with a weight having a load of 500 kg were used. 500 kg corresponds to a load at the time of connecting three pins of the corresponding size.

No. 60 is a condition in which 25% of graphite with respect to the total weight of the solid lubricant component is mixed into the solid lubricanat of the constituent elements of the solid lubricating coating film 3 in excess of the specified amount of 80%. No. 60 deviates from the lower limit of the fraction of PTFE in the standard of the solid lubricating coating film 3, and is a comparative example in which the number of times of M/B is only 1. It seems that the lubricity realized by PTFE is destroyed due to a large amount of graphite.

No. 61 is a case where carbon fibers are contained in an amount exceeding a preferred range with respect to the total weight of the constituent of the binder resin as the binder resin of the constituent elements of the solid lubricating coating film 3. No. 61 is a condition in which 15% of carbon fibers are mixed with respect to the total weight of the binder resin component. No. 61 is regarded as a comparative example in which the number of times of M/B is 2.

No. 62 is a case where incorporation of carbon fibers is suppressed to 10%. In this case, 7 times of make-up/break-out can be realized, and this case is an inventive example. No. 63 is a case where Mn phosphate is formed on the pin 1 to form the solid lubricating coating film 3 in a specified range while the coupling is shot blasted as it is. In this case, 10 times or more of make-up/break-out can be realized, and this case is an inventive example in which it is determined as "acceptable (excellent)".

Nos. 64 and 65 are cases of a high alloy, and are evaluations using a UHP™-15CR-125 material manufactured by JFE Steel Corporation. The evaluation is performed using a JFEBEAR™ connection. In addition, these cases are evaluation cases where weight-equipped power tongs with a weight having a load of 500 kg were used. 500 kg corresponds to a load at the time of connecting three pins of the corresponding size.

No. 64 is a case where the coupling is subjected to Cu-Sn plating to form the solid lubricating coating film 3. In No. 64, it is confirmed that the number of times of M/B is 10 or more (the test is terminated after 10 times), and is an inventive example in which it is determined as "acceptable (excellent)".

On the other hand, No. 65 is a case where the molecular weight of the solid lubricant, which is one of the constituent elements of the solid lubricating coating film 3, is larger than the specified value. In the case of No. 65, lubricity is not ensured, the number of times of M/B is only 5, and it is regarded as a comparative example in which it is determined as unacceptable.

<Optimal Range of Film Thickness>

Tables 9 and 10 are used to show examples of studies on the optimal range of the influence of the thickness of the solid lubricating coating film. The Dry film in the tables corresponds to a solid lubricating coating film.

[Table 9]

| No. | Steel type | OD (inch) | WT (LPF) | Connection type | Evaluation method | Base film on CPLG side | Thickness of CPLG Dry film (um) | Pencil hardness of CPLG film | Amount of outermost layer coating layer applied (mg/cm²) | Thickness of PIN corrosion protection and lubricating film (um) | Pencil hardness of coating film on PIN side | Number of times of M/B | Acceptance | Reference |
|---|---|---|---|---|---|---|---|---|---|---|---|---|---|---|
| 57-1 | HP2-13CR-110 (13CR-5Ni-2Mo) | 5.5" | 23# | JFELION™ | 1,000kg of vertical weight tongs using about 1-m short PIN | Cleraplate™ (Cu-Sn plating) | 10 | 4H | 0.3-0.5mg/cm² (CPLG, application to only Dry film) | 10-20um P2 type | 5B~6B | 7 | Acceptable | Inventive Example |
| 57-2 | | | | | | | 30 | | | | | 10 | Acceptable (excellent) | Inventive Example |
| 57-3 | | | | | | | 50 | | | | | ≧15 | Acceptable (excellent) | Inventive Example |
| 57-4 | | | | | | | 80 | | | | | ≧15 | Acceptable (excellent) | Inventive Example |
| 57-5 | | | | | | | 95 | | | | | 7 | Acceptable | Inventive Example |
| 57-6 | | | | | | | 120 | | | | | 5 | Unacceptable | Comparative Example |

[Table 10]

| No. | Steel type | OD (inch) | WT (LPF) | Connection type | Evaluation method | Base film on CPLG side | A: thickness of CPLG Dry film (um) | Pencil hardness of CPLG film | Amount of outermost layer coating layer applied (mg/cm²) | B: thickness of PIN corrosion protection and lubricating film (um) | PIN Chemical | Pencil hardness of coating film on PIN side | A+B um | Number of times of M/B | Acceptance | Reference |
|---|---|---|---|---|---|---|---|---|---|---|---|---|---|---|---|---|
| 6-1 | Q125 | 9-5/8" | 53.5# | JFELION™ | 1,000kg of vertical weight tongs using about 1-m short PIN | Cheraplate™ (Cu-Sn plating) | 50 | 2H | None | 30 | P1 type | 6B | 80 | 4 | Acceptable | Inventive Example |
| 6-2 | | 9-5/8" | 53.5# | | | | 80 | 2H | | 30 | | 6B | 110 | 3 | Acceptable | Inventive Example |
| 6-3 | | 9-5/8" | 53.5# | | | | 95 | 2H | | 30 | | 6B | 125 | 2 | Unacceptable | Comparative Example |

Among the studies on the coupling connection films (boxes) and the solid lubricating coating films and the base films related to the pin connection films which have already been studied in Tables 1 to 8, only several thread portions were cut out to examine the optimal range of the film thickness.

First, in Table 9, the same film material as that of the sample of No. 57 (5.5"23#, JFELION™ connection) in Tables 7 and 8 was configured, and the film thickness only on the coupling connection side (box) was systematically changed. ClearPlate™ plating (Cu-Sn binary plating) was formed as a base film of the coupling connection, and a solid lubricating coating film was formed thereon. In addition, the outermost layer coating was also performed in the same manner. A make-up/break-out test was performed using weight tongs having a load of 1 ton. The experimental methods were according to Tables 1 to 8. As the samples, samples having different film thicknesses on the coupling side (box side) of 10 μm, 30 um, 50 um, 80 um, 95 μm, and 120 um were prepared. A lubricating and corrosion protective paint was thinly applied to the pin connection in the same manner under all conditions to obtain a thickness of 10 to 20 um. The reason that the thickness value is broadly described is as follows. This is because, although application is performed using a brush, the film thickness is close to 20 um at the overlapping portion with the brush, and thus, in many portions, the film thickness is 10 to 15 um as viewed with an electromagnetic film thickness meter.

The film thickness on the coupling side is a value obtained by measuring a crest portion (thread portion) of the fifth peak from the pipe end portion with an electromagnetic film thickness meter after applying the solid lubricating coating film. These samples were subjected to a make-up/break-out test, and it was evaluated as "acceptable" in a case where it was 7 times or more, and was evaluated as "acceptable: excellent" in a case where it was 10 times or more, based on the acceptance criteria of the tubing size. The results were obtained in this order, 7 times (acceptable), 10 times (acceptable: excellent), ≥ 15 times (terminated after 15 times, acceptable: excellent), ≥ 15 times (terminated after 15 times, acceptable: excellent), 7 times (acceptable), and 5 times (unacceptable). These results indicate that the film thickness of the solid lubricating coating film of the present disclosure is preferably in the specified range of 5 um to 95 μm, preferably in the range of 30 to 80 um, and more preferably in the range of 50 to 80 um.

In addition, regarding the thickness, the same test was performed, and it was confirmed that the effect was obtained in the film thickness range as described above even in other sizes.

Next, studies on the sum of the film thickness of the coupling connection and the film thickness of the pin connection will be described. In Table 10, from Tables 1 and 2, the sample of No. 6 (9-5/8"53.5#, JFELION™ connection) was formed on the coupling by changing the thickness of the solid lubricating coating film (pencil hardness: 2H) formed of the polyamideimide resin and polytetrafluoroethylene (PTFE), which was the subject of the present disclosure. In addition, Table 10 shows that the examination results in which the pin connection is configured under conditions in which the film thickness of the rust prevention and corrosion protection material (pencil hardness: 6B) is changed. The former film thickness was set to three conditions of 50 μm, 80 μm, and 95 μm, the latter film thickness was set to 30 μm, the films having a total film thickness of 80 um, 110 μm, and 125 um were prepared, and a make-up/break-out test was performed. In this order of conditions, the number of times of make-up/break-out was 4 (acceptable), 3 (acceptable), and 2 (unacceptable). As a result, it was confirmed that the sum of the film thicknesses was in a preferred range up to 110 um. Regarding the sum of the thicknesses of the solid lubricating coating film and the lubricating and rustproof film in the coupling and the pin, the same test is performed, and it is confirmed that the effect can be obtained in the film thickness range as described above even in other sizes.

Here, this application claims priority of Japanese Patent Application No. 2021-91461 (filed on May 31, 2021), the entire contents of which are incorporated herein by reference. Although the description has been given referring to a limited number of embodiments herein, the scope of the present invention is not limited thereto. It is obvious for those skilled in the art to modify the embodiments based on the disclosure above.

Reference Signs List

| | |
|---|---|
| 1 | Pin |
| 1a | Male thread |
| 2 | Box |
| 2a | Female thread |
| 3 | Solid lubricating coating film |
| 4 | Base film |
| 5 | Surface layer |
| 10 | Tightening surface |
| 11 | Weight |
| 13 | Power tongs |

**Claims**

1. An agent for forming a solid lubricating coating film in a thread portion of oil country tubular goods, wherein

   a solid lubricant is dispersed in a binder resin,
   90 wt% or more of the binder resin is a polyamideimide resin, an average molecular weight of the polyamideimide is 20,000 or more and 40,000 or less,
   80 wt% or more of the solid lubricant is polytetrafluoroethylene (PTFE), and an average molecular weight of the PTFE is 30,000 or less.

2. Oil country tubular goods in which a lubricating coating film including a solid lubricating coating film is formed in a thread portion, wherein

   the solid lubricating coating film is formed by dispersing a solid lubricant in a binder resin,
   90 wt% or more of the binder resin is a polyamideimide resin (PAI), an average molecular weight of the PAI is 20,000 or more and 40,000 or less,
   80 wt% or more of the solid lubricant is polytetrafluoroethylene (PTFE), and an average molecular weight of the PTFE is 30,000 or less.

3. The oil country tubular goods according to claim 2, wherein
   the PTFE contained in the solid lubricant is 20 wt% or more and 50 wt% or less of the total weight of the solid lubricating coating film.

4. The oil country tubular goods according to claim 2 or 3, wherein
   a hardness of the solid lubricating coating film is F or higher and 4H or lower in terms of pencil hardness.

5. The oil country tubular goods according to any one of claims 2 to 4, wherein

   the lubricating coating film includes a base film formed between a tightening surface of the thread portion and the solid lubricating coating film, and
   the base film includes a phosphate-treated film or an electroplated film having a Vickers hardness of 200 HV or higher.

6. The oil country tubular goods according to any one of claims 2 to 5, wherein

   the lubricating coating film includes a surface layer formed on the solid lubricating coating film,
   the surface layer contains a solid lubricant and a binder resin,
   the solid lubricant in the surface layer is one or a combination of two or more kinds of compounds containing fatty acids of the following X group and metal elements of the following Y group, and
   the binder resin in the surface layer is a fluorine-based organic compound,

   · X group: stearic acid, isostearic acid, behenic acid, lauric acid, and 12-hydroxystearic acid,
   · Y group: Li, Na, Mg, Al, Ca, Zn, and Ba.

7. The oil country tubular goods according to claim 6, wherein
   a melting point of the surface layer is 70°C or higher.

8. A threaded joint for oil country tubular goods in which a box having a female thread and a pin having a male thread are connected, wherein one component of the box and the pin includes the oil country tubular goods including the lubricating coating film according to any one of claims 2 to 6,
   a coating film is not formed on a tightening surface of a thread portion of the other component of the box and the pin, or a coating film having at least one property of corrosion resistance and corrosion protection is formed on the tightening surface of the thread portion of the other component of the box and the pin.

9. A threaded joint for oil country tubular goods in which a box having a female thread and a pin having a male thread are connected, wherein
   each of both components of the box and the pin includes the oil country tubular goods including the lubricating coating film according to any one of claims 2 to 6.

**10.** The threaded joint for oil country tubular goods according to claim 9, wherein

a thickness of each of the solid lubricating coating films formed on both the box and the pin at a crest position of the thread portion is 5 um or more and 95 um or less, and
the following Expression (1) is satisfied,

$$A1 + A2 \leq 110 \ \mu m \cdots (1),$$

in which A1 ($\mu$m) is a thickness of the solid lubricating coating film formed in the thread portion of the box at the crest position, and A2 ($\mu$m) is a thickness of the solid lubricating coating film formed in the thread portion of the pin at the crest position.

# FIG. 1

FIG. 2A

FIG. 2B

EP 4 332 205 A1

FIG. 3A

FIG. 3B

FIG. 4

FIG. 5A

FIG. 5B

FIG. 5C

# FIG. 6

$$CH_2 = \overset{\overset{\displaystyle H}{|}}{\underset{\underset{\displaystyle COOR_1}{|}}{C}}$$

ACRYLIC ACID MONOMER

$$CH_2 = \overset{\overset{\displaystyle CH_3}{|}}{\underset{\underset{\displaystyle COOR_2}{|}}{C}}$$

METHACRYLIC ACID MONOMER

$$CH_2 = \overset{\overset{\displaystyle R_3}{|}}{\underset{\underset{\displaystyle COOR_4 - CF_3}{|}}{C}}$$

FLUORINE-CONTAINING
MONOMER (2)

$$CH_2 = \overset{\overset{\displaystyle R_5}{|}}{\underset{\underset{\displaystyle COOR_6 - C_nF_{2n+1}}{|}}{C}}$$

FLUORINE-CONTAINING
MONOMER (2)

$R_1, R_2, R_3, R_5$ : ALKYL GROUP ; $-C_nH_{2N+1}$

$R_4, R_5$ : ALKYLENE GROUP ; $-(CH_2)_N-$

FIG. 7

# FIG. 8

# FIG. 9

# FIG. 10

## INTERNATIONAL SEARCH REPORT

| International application No. |
|---|
| **PCT/JP2022/021278** |

### A. CLASSIFICATION OF SUBJECT MATTER

*C10M 157/02*(2006.01)i; *C10N 20/04*(2006.01)n; *C10N 30/06*(2006.01)n; *C10N 40/00*(2006.01)n; *C10N 50/08*(2006.01)n; *F16B 33/06*(2006.01)i; *C10M 129/40*(2006.01)i; *C10M 147/02*(2006.01)i; *C10M 149/18*(2006.01)i; *F16L 15/04*(2006.01)i
FI: C10M157/02; F16L15/04 A; F16B33/06 E; F16B33/06 Z; C10M147/02; C10M149/18; C10M129/40; C10N30:06; C10N40:00 G; C10N50:08; C10N20:04

According to International Patent Classification (IPC) or to both national classification and IPC

### B. FIELDS SEARCHED

Minimum documentation searched (classification system followed by classification symbols)

C10M157/02; C10N20/04; C10N30/06; C10N40/00; C10N50/08; F16B33/06; C10M129/40; C10M147/02; C10M149/18; F16L15/04

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | WO 2014/042144 A1 (NIPPON STEEL & SUMITOMO METAL CORP.) 20 March 2014 (2014-03-20) claims, paragraphs [0040]-[0124], examples 2, 4 | 1-5, 8--10 |
| Y | | 6-7 |
| Y | WO 2015/030252 A1 (NIPPON STEEL & SUMITOMO METAL CORP.) 05 March 2015 (2015-03-05) paragraphs [0030], [0045], [0069] | 6-7 |
| Y | JP 2013-108556 A (NIPPON STEEL & SUMITOMO METAL CORP.) 06 June 2013 (2013-06-06) paragraphs [0061], [0063] | 6-7 |
| Y | WO 2009/072486 A1 (SUMITOMO METAL INDUSTRIES, LTD.) 11 June 2009 (2009-06-11) paragraph [0067] | 6-7 |

☑ Further documents are listed in the continuation of Box C.  ☑ See patent family annex.

\* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **08 July 2022** | **19 July 2022** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (January 2015)

## INTERNATIONAL SEARCH REPORT

| International application No. |
| --- |
| **PCT/JP2022/021278** |

**C.     DOCUMENTS CONSIDERED TO BE RELEVANT**

| Category* | Citation of document, with indication, where appropriate, of the relevant passages | Relevant to claim No. |
| --- | --- | --- |
| A | JP 2013-209960 A (SUMICO LUBRICANT CO., LTD.) 10 October 2013 (2013-10-10) paragraph [0029] | 1-10 |
| A | JP 3-168259 A (HITACHI CHEMICAL CO., LTD.) 22 July 1991 (1991-07-22) p. 5, lower right column, comparative example 5 | 1-10 |
| A | JP 1-289896 A (CENTRAL GLASS CO., LTD.) 21 November 1989 (1989-11-21) p. 2, upper left column, lines 9-19, pp. 4, 5, example 1 | 1-10 |
| A | JP 63-286435 A (CENTRAL GLASS CO., LTD.) 24 November 1988 (1988-11-24) p. 2, upper left column, line 13 to upper right column, line 6, pp. 4, 5, example 1 | 1-10 |
| A | JP 2015-506445 A (NIPPON STEEL & SUMITOMO METAL CORP.) 02 March 2015 (2015-03-02) claims, examples | 1-10 |
| A | US 2009/0078328 A1 (E. I. DU PONT DE NEMOURS AND CO.) 26 March 2009 (2009-03-26) claims, examples | 1-10 |

Form PCT/ISA/210 (second sheet) (January 2015)

**INTERNATIONAL SEARCH REPORT**
Information on patent family members

International application No.

**PCT/JP2022/021278**

| Patent document cited in search report | | | Publication date (day/month/year) | Patent family member(s) | | | Publication date (day/month/year) |
|---|---|---|---|---|---|---|---|
| WO | 2014/042144 | A1 | 20 March 2014 | US | 2015/0210888 | A1 | |
| | | | | claims, paragraphs [0040]-[0128], examples 2, 4 | | | |
| | | | | EP | 2896683 | A1 | |
| | | | | CN | 104619819 | A | |
| WO | 2015/030252 | A1 | 05 March 2015 | US | 2016/0208194 | A1 | |
| | | | | paragraphs [0045], [0073], [0114] | | | |
| | | | | EP | 3042945 | A1 | |
| | | | | CN | 105492585 | A | |
| JP | 2013-108556 | A | 06 June 2013 | US | 2014/0284919 | A1 | |
| | | | | paragraphs [0083], [0084] | | | |
| | | | | EP | 2780618 | A1 | |
| | | | | CN | 103946617 | A | |
| WO | 2009/072486 | A1 | 11 June 2009 | US | 2010/0301600 | A1 | |
| | | | | paragraph [0085] | | | |
| | | | | EP | 2216576 | A1 | |
| | | | | CN | 101939579 | A | |
| JP | 2013-209960 | A | 10 October 2013 | (Family: none) | | | |
| JP | 3-168259 | A | 22 July 1991 | (Family: none) | | | |
| JP | 1-289896 | A | 21 November 1989 | (Family: none) | | | |
| JP | 63-286435 | A | 24 November 1988 | GB | 2205576 | A | |
| | | | | p. 2, line 15 to p. 3, line 16, pp. 10-13, example 1 | | | |
| | | | | DE | 3816971 | A1 | |
| | | | | FR | 2615518 | A1 | |
| JP | 2015-506445 | A | 02 March 2015 | US | 2015/0192229 | A1 | |
| | | | | claims, examples | | | |
| | | | | WO | 2013/176281 | A1 | |
| | | | | EP | 2852785 | A1 | |
| | | | | CN | 104334951 | A | |
| US | 2009/0078328 | A1 | 26 March 2009 | WO | 2009/042427 | A1 | |
| | | | | EP | 2212034 | A1 | |
| | | | | CN | 101801543 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002348587 A
- JP 2002310345 A
- JP 2005299693 A
- JP 2008069883 A
- JP 2002327874 A
- JP H11199884 A
- JP 2001049285 A
- JP 2008038108 A
- JP 2011105831 A
- JP H08103724 A
- JP H08105582 A
- JP 2001065751 A
- JP 2001099364 A
- JP 2021091461 A

**Non-patent literature cited in the description**

- **TSURU et al.** *Journal of the Japanese Association for Petroleum Technology,* 1996, vol. 61 (6), 527-536